(19) Europäisches Patentamt / European Patent Office / Office européen des brevets

(11) **EP 3 556 576 B1**

(12) **EUROPEAN PATENT SPECIFICATION**

(45) Date of publication and mention
of the grant of the patent:
**08.06.2022  Bulletin 2022/23**

(51) International Patent Classification (IPC):
*B60C 11/24* (2006.01)     *G06T 7/60* (2017.01)
*G06T 7/55* (2017.01)       *G01M 1/02* (2006.01)

(21) Application number: **19169152.6**

(22) Date of filing: **15.04.2019**

(52) Cooperative Patent Classification (CPC):
**B60C 11/246; G06T 7/001;** G06T 2207/10016;
G06T 2207/30164

(54) **PROCESS AND SYSTEM FOR THE DETECTION OF DEFECTS IN A TYRE**

VERFAHREN UND SYSTEM ZUR FESTSTELLUNG VON REIFENDEFEKTEN

MÉTHODE ET SYSTÈME DE DÉTECTION DE DÉGRADATIONS DE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.04.2018  IT 201800004673**

(43) Date of publication of application:
**23.10.2019  Bulletin 2019/43**

(73) Proprietor: **Bridgestone Europe NV/SA
1932 Zaventem (BE)**

(72) Inventors:
 • **Oliva, Alessandro
  00128 Roma (IT)**
 • **Bocchini, Roberto
  00128 Roma (IT)**

(74) Representative: **Marchetti, Alessio
  Bridgestone Technical Center Europe S.p.A.
  Via Fosso del Salceto, 13/15
  00128 Roma (IT)**

(56) References cited:
WO-A1-2017/060739     DE-A1-102012 024 545
US-A- 5 874 670        US-A1- 2016 221 404

## Description

## Technical field of the invention

The present invention generally relates to the sector regarding digital analysis techniques in the fields of image acquisition, image processing and computer vision. The present invention relates, more particularly, to a method and to an apparatus for detecting the presence of defects on the surface of a pneumatic tyre.

## Background

The field of application of the present invention is constituted by the endurance (or durability) tests to which pneumatic tyres are subjected during the development phase. This is a type of test that is carried out on test equipment: the pneumatic tyre is mounted on an axle and pressed by means of a press onto a cylindrical drum, or drum; the latter is set in rotation by an electric motor, and in turn rotates, by friction, the pneumatic tyre, to which certain values of load and speed of rotation are thus imposed.

In endurance tests, high loads are applied, depending upon the size and construction of the pneumatic tyre, and a medium-high speed, in addition to a given ambient temperature: the procedure of interest requires all of these parameters to be kept constant during the entire duration of the test.

The objective of the test is the evaluation of the mechanical resistance to fatigue of the pneumatic tyre, and in particular of the sidewalls and the beads, which are the elements that are most stressed in this case and which give rise to various failure mechanisms. The types of failure that are most frequently encountered in these tests are cracks, which constitute the main object of the study of this project, and bulges. The former consist of material fractures or separations which occur within the mass of the rubber and which propagate until they manifest themselves upon the surface in the form of sipes or cracks. The latter instead consist in surface swellings of various kinds: in the observed tests they were usually due to the formation of air bubbles beneath the surface of the sidewall, due to the effect of the detachment of the latter from the carcass internally.

More rigorously, it is possible to distinguish between a sidewall crack and a bead crack based upon the position in which they are generated, and similarly, between a sidewall bulge, a bead bulge and an innerliner bulge (the latter is not visible externally).

*"Cracks"* are material fractures or separations which occur within the mass of the rubber of a pneumatic tyre, and that propagate until they manifest themselves upon the surface thereof in the form of sipes or cracks.

Typically, tests are performed on pneumatic tyres in order to identify failure phenomena, in particular of the aforesaid *cracks,* wherein a significant aspect for the purposes of the correct evaluation of the formation and propagation thereof resides in the timely identification of the latter.

In fact, identifying a *crack* at an early stage, or as soon as possible starting from the moment at which it becomes visible, is equivalent to being able to study the failure at a moment in time that is close to that of the formation thereof.

To date, multiple methodologies are known that are aimed at the identification of the aforesaid *cracks* based upon, for example, analyses of the wavelets, of the vibrations or also of the sound generated by a pneumatic tyre under test.

However, insofar as they are often based upon experimental calculations and empirical formulas, these methods make it possible to obtain inaccurate information with respect to the aforementioned phenomena.

Currently, one of the most widely used techniques for the detection of the failure of a pneumatic tyre being tested, appears to be visual inspection, which is conducted by an operator at regular intervals of time.

This operation, however, implies the implementation of safety procedures, for which, before the inspection, there must absolutely be a downtime period, for the machinery used to support the pneumatic tyre during the test, which is long enough to allow for the cooling of the latter.

Consequently, in order to avoid excessively long test execution periods, the visual inspection cannot be performed too frequently, and this drastically lowers the probability of observing a crack at an early stage.

Further, in terms of the safety of an operator assigned to such activities, to closely inspect an object that is under pressure and possibly damaged is a potentially dangerous operation.

US 2016/0221404A1 describes a method and an apparatus for detecting abrasion in a tread of a pneumatic tyre, based upon images of the pneumatic tyre that are captured during movement.

US 5874670 describes a method for estimating irregular wear in a pneumatic tyre that has previously been treated with a special paint, by means of the analysis of images which allow for the detection of the irregular wear of the paint layer.

WO 2017/060739A1 describes a method for the analysis of the conditions of a pneumatic tyre, when this is in use on a vehicle, based upon the acquisition of images of different portions of the periphery of the pneumatic tyre.

DE102012024545A1 describes a method for the analysis of the tread of a pneumatic tyre based upon its laser scan.

The need to thoroughly study the mechanism of the formation and propagation of cracks stems from the need to improve specific pneumatic tyre performance aspects, which currently leads to the search for new constructions and compounds, and an overall reduction in weight. The behavior of newly developed pneumatic tyres is also assessed by means of the use of FEM models, which require accurate data in order to simulate the propagation of the cracks with accuracy, as compared to actual methods. Identifying the occurrence of a sipe as soon as possible becomes important.

## Summary of the invention

The purpose of the present invention is therefore to introduce an innovative method for the remote inspection of the pneumatic tyre that makes the formation of a failure visible in a timely manner, while running a test.
The idea for achieving such an objective has been to implement and develop a vision system capable of making it possible to observe sidewalls with high resolution and image quality.
The purpose of the present invention is therefore to overcome the problems outlined above, and this is achieved by means of a process for the real-time detection of defects in the surface of a pneumatic tyre as defined by claim 1.
The object of the present invention is also a detection apparatus as defined in claim 15.
A further object of the present invention is a computer program that is suitable for implementing the procedures for the acquisition and processing of the images needed according to the process of the invention, as defined in claim 16.
Further characteristics of the present invention are defined in the corresponding dependent claims.
One objective is the introduction and the configuration of a vision system that is capable of acquiring and analyzing images of the sidewalls of a rotating pneumatic tyre during the performance of tests.
The peculiarity of the system is that of employing a line scanning camera, and in this case the development has been limited to a particular type of pneumatic tyre at a constant speed of rotation thereof.
The activity, by means of conducting multiple tests on the machine, has been oriented in the first place towards maturing experience in the setting and adjustment of the system, both in terms of the positioning of the cameras and the optical adjustment and of the choice of the hardware components needed for the acquisition of the images and the adjustment of the related operating parameters. Subsequently to the identification of a stable configuration, and in parallel to the improvement of the latter, interest has also been aimed at the problem of developing software that is able to identify, by analyzing the images acquired by the system, the occurrence of a failure, in particular of sipes or cracks, on the sidewalls of the pneumatic tyre in a fully automatic way and while running the test.
Therefore, from a technical/scientific perspective of skills development, the thesis falls into a general context of digital analysis techniques from the fields of Image Acquisition, Image Processing and Computer Vision.
From an industrial point of view, it is attached to the regions of quality control and product measurements, wherein the implementation is becoming frequent of vision systems based upon matrix and linear cameras capable of performing such operations in an automatic way.
Specifically, the invention falls within the perspective of test monitoring and the accretion of knowledge, insofar as it constitutes one of the first approaches to learning and the experience on in-depth image processing techniques, with the aim of introducing a vision system of actual use and adaptable to most types of tests.
The present invention, in overcoming the problems of the prior art, involves numerous and evident advantages.
The main peculiarity of the project is the use, in order to capture images, of one or two high scanning frequency linear cameras positioned in the vicinity of the sidewalls of the pneumatic tyre in place of a common camera with a matrix sensor. Furthermore, the algorithm for searching objects within the image differs from more common ones, because the image of a sidewall of a pneumatic tyre has a complex variety of shapes, textures and objects, and it is therefore difficult to determine which objects are actually cracks. The strategy is that of capturing a sample image at regular intervals of time, and comparing it, in terms of the intensity of the pixels and complex functions based upon further invariants, with the first image taken at the start of the test. This means that the search for objects is not performed by considering only the single sample image, but by analyzing the differences with respect to a reference image. A region is considered to be suspicious when, between one image and the other, it presents significant variations in the intensity of the pixels and in the number of invariants.
The term "invariants" refers to distinctive characteristics of the image, namely significant points that can be identified thereupon, which are usually exploited with object recognition or image matching problems in order to join in a coherent way two or more different images of an object or scene.
The present invention relates to a method for the real-time detection of defects in the surface of a pneumatic tyre. This method involves placing the pneumatic tyre in rotation about the axis thereof at a predetermined speed and performing a scan of the surface thereof by means of the acquisition of linear images in sequence at a predefined frequency using a linear digital camera in order to obtain a sequence of images of said surface.
A reference image is then selected from amongst said overall images, and each of said overall images is pre-processed in order to normalize them in size and/or brightness and/or contrast.
Subsequently each overall image obtained is stored, together with corresponding time information that identifies the instant of the generation thereof, and each overall image, temporally successive to said reference image, is compared with said reference image in order to detect the formation of a defect.

Finally, the detection is reported of the formation of a defect at the instant of the generation of the corresponding overall image.

The process according to the present invention therefore allows an operator to conduct the inspection of a pneumatic tyre in safety and in less time, because the state thereof can be observed in real time and remotely without having to interrupt the test with long pauses and without having to board the machine for the inspection.

Furthermore, the speed and flexibility with which it is possible to perform the inspection also makes it possible to check the pneumatic tyre much more frequently, and at the same time allows for better planning of the daily activities of the operators. It is also possible to decide, with different tolerances, the moment at which to stop the test in order to possibly proceed with further studies or non-destructive tests upon the pneumatic tyre.

Again, this solution also confers advantages in technical and economic terms.

In fact, the performance of tests without interruptions on the one hand prevents the pneumatic tyre from having rest stages, which involve a certain cooling and therefore a certain recovery at a thermal and mechanical level, thereby rendering the test results most rigorous and reliable.

In addition, the test duration required in order to identify a *crack* is considerably shorter compared to known techniques, thereby obtaining more timely results and greater availability of the machine suitable for supporting the machinery.

Further advantages, characteristics and usages of the present invention will become clear from the following detailed description of preferred embodiments thereof given purely by way of non-limiting examples.

## Brief description of the figures

Reference will be made to the figures of the accompanying drawings, wherein:

- Figure 1 shows an example of raw images;
- Figure 2 shows an example of search for the approximate position of the edge of the rim;
- Figure 3 shows an example of search for the exact position of the edge of the rim;
- Figure 4 shows an example of an image before (left) and after (right) the cropping operation;
- Figure 5 shows an example of an image before (left) and after (second from the right) the cropping operation of a revolution of a wheel;
- Figure 5A shows an example of a cropping and alignment step;
- Figure 6 shows a representative diagram of the nearest-neighbor (left), bilinear (center), and bicubic (right) interpolation operations;
- Figure 7 shows an example of an image affected by aliasing (left) and the same image obtained with anti-aliasing (right);
- Figure 8 shows an example of an image stretched and made to have the same resolution along the two dimensions;
- Figure 9 shows an example of a function adopted for the calculation of the increase in brightness to be assigned to each pixel;
- Figure 10 shows an example of an image clarification;
- Figure 11 illustrates an example of a detail that shows the subdivision of an image into square cells;
- Figure 12 shows a graph representing the data results for different quality parameters, which are applied to a thousand executions of the algorithm;
- Figure 13 shows a graph representing the data results for different thresholds for the minimum difference in the number of corners, applied to a thousand executions of the algorithm;
- Figures 14 to 16 show the result of the characterization of the images in terms of the displacement vector range;
- Figure 17 is a flow diagram that exemplifies such a characterization;
- Figures 18 to 20 show examples of images of the isolation of a crack at different stages of propagation;
- Figure 21 shows an example of progressions of the cumulative mean and the arithmetic mean for lines;
- Figure 22 shows an example of a graph corresponding to a line of pixels;
- Figure 23 shows an example of the progression of the cross-correlation in the case of the two signals shown in Figure 22;
- Figure 24 shows an example of the isolation of five pairs of markers, both on the reference image (above) and the current image;
- Figure 25 shows, for the solidity parameter, an example of a region associated with a crack and a representation of the convex polygon;
- Figure 26 shows, for the eccentricity parameters and the relationship between the axes, a representational example of the equivalent ellipse;

- Figure 27 shows, for the extension parameter, a representational example of the bounding box;
- Figure 28 shows an example of graphs of mean intensities of the lines of pixels in relation to the reference image and to the current image before the brightness correction;
- Figure 29 shows an example of a partial detail of a map of the differences in intensity;
- Figure 30 shows a progression of the solidity as a function of the region in relation to a single test;
- Figure 31 shows a progression of the roundness as a function of the region in relation to a single test;
- Figure 32 shows a progression of the solidity as a function of the region calculated using all available data;
- Figure 33 shows a progression of the solidity as a function of the region calculated using all available data;
- Figure 34 shows a map of the differences in intensity according to the geometric selection;
- Figure 35 shows an example of the operation of the method based upon 2-D cross-correlation;
- Figure 36 shows an example of the operation of the method based upon Harris-corner matching;
- Figure 37 shows a comparison which shows the effects of the two methods of Figure 35 and Figure 36, respectively, in the processing of the same objects;
- Figure 38 shows a real crack identified during the course of a test;
- Figure 39 shows examples of false positives caused by rubber shavings deposited on the sidewall of a pneumatic tyre; and
- Figure 40 is an exemplary and simplified plan of an apparatus according to the present invention.

## Detailed description of embodiments of the invention

Some embodiments of the present invention will be described below, making reference to the above figures.

The idea underlying the present invention is to present a method for the automatic detection of *cracks* provided with a system equipped with a custom management program as a function of the requirements that are to be obtained.

According to a preferred embodiment of the invention, such software has been developed in such a way as to make the system have the following properties:

1. it continuously receives images of both sidewalls of the pneumatic tyre from the cameras and constantly displays them on a display, with a slow-motion effect; this allows the inspection of the pneumatic tyre to be performed remotely, avoiding the operator having to go on board the machine for the visual inspection, which is then eliminated along with all of the safety risks relating thereto; it should also be noted that the remote inspection is performed with the pneumatic tyre turning at the test speed, i.e., without the need for downtime or speed reductions, with the benefits of a lesser test duration, greater availability of the machine, and better planning of activities of the operators;

2. the system is also capable of acquiring and storing on the hard disk of the computer the sample-images from both sidewalls at regular time intervals, which in particular are set on the order of a few minutes; this time interval in fact constitutes the new pneumatic tyre inspection frequency, which will therefore not be more than a few hours, as in the case of the visual inspection; clearly, however, it is not plausible to have operators that check every new image as soon as it is captured, and, therefore, it is for this reason that there was the need for software that is capable of checking each individual image and accurately detect the formation of a failure;

3. the sample images saved in memory are processed so as to obtain a database of images that are all consistent with one another, i.e., all having the same dimensions in length and height, and the same start and end points; this step will henceforth be referred to as the processing or pre-processing of the image, insofar as it constitutes a preliminary step in search for failures;

4. after having processed each sample image, the software analyzes each sample image with the aim of identifying as soon as possible the occurrence of a crack in the sidewall, and while the test is in progress, i.e., without it being discontinued; this step will henceforth be referred to as analysis or detection;

5. in the case wherein a suspicious element is detected, the software can send an e-mail alert to the parties concerned so that appropriate actions can be taken in a timely manner, or, if connected to the control apparatus of the machine, it could halt the test directly.

In general terms, therefore, the present invention involves placing the pneumatic tyre in rotation about the axis thereof at a predetermined speed and performing a scan of the surface thereof by means of the acquisition of linear images in sequence at a predefined frequency using a linear digital camera in order to obtain a sequence of images of said surface.

These images are then processed, in particular:

a reference image is then selected from amongst said overall images and each of said overall images is pre-processed in order to normalize them in size and/or brightness and/or contrast.

Subsequently, each overall image obtained is stored together with corresponding time information that identifies the instant of the generation thereof, and each overall image, temporally successive to said reference image, is compared with said reference image in order to detect the formation of a defect.

Finally, the detection of the formation of a defect is reported together with the instant of the generation of the corresponding overall image.

The camera used, as already indicated, is a camera wherein the sensor thereof is composed of a single line of pixels, rather than of a matrix: this renders it capable of reaching very high scanning frequencies, insofar as the intelligence internal to the camera and the attached communication network manage a much smaller amount of data, insofar as it is received by a line of a few thousand pixels, rather than by a matrix of several million elements. The individual acquired lines are then combined one after the other, thereby composing the final image.

They can therefore be positioned in the vicinity of the sidewall, arranging the sensor along the radial direction of the wheel, obtaining good image resolution and brightness, and at the same time they provide a single image of the sidewall that is captured in a continuous manner, rather than a discontinuous series of images to be processed and merged therebetween.

The performance of the camera is selected according to the type of acquisition to be performed, the dimensions of the pneumatic tyre to be examined, and the default speed of rotation, for example 60 km/h.

Of course, lenses and/or objectives and/or lighting devices can be provided in order to improve capturing.

The term "banks" in the present description makes reference to the examination of the surface of the sidewall of the pneumatic tyre, and more specifically to an apparatus capable of simultaneously examining the two sidewalls, by means of two cameras arranged symmetrically with respect to the pneumatic tyre; it is clearly understood that the same process can advantageously also be used to examine other portions of the surface of the pneumatic tyre, such as the tread, in implementing the necessary adaptations to the apparatus and in suitably positioning the camera(s).

Image Capture

For the implementation of the management software, the MATLAB programming environment was chosen, insofar as it offers specific toolboxes for the acquisition and processing of images, as well as possibilities for interfacing with numerous protocols and devices. The first approach, based upon the use of a Gigabit Ethernet camera, was to produce integrated code for managing the acquisition, processing and analysis of the images.

This approach was not however successful, insofar as, especially for prolonged acquisitions such as those necessary for the tests in question (lasting a few days), the acquisition of the images was not entirely stable nor, therefore, reliable. This is probably due to the fact that the application is rather demanding in terms of performance due to the continuous acquisition of images; it is therefore plausible that the Gigabit Ethernet protocol had reached the limit thereof, thereby failing due to limited bandwidth or the size and management of the buffer.

The final approach was therefore that of employing a camera that functions with the Camera Link protocol, in the basic configuration.

Displaying the images continuously on the display and saving the sample images at regular time intervals are performed by using a customized version of the proprietary software normally supplied with the camera. The pre-processing and image analysis (requirements three, four and five of the list in Section 3.1), however, remain the responsibility of the code developed as part of the activity in question, again implemented within the MATLAB environment.

The basic idea for the recognition of failures consists in comparing the sample images, captured and stored at regular intervals of a few minutes, with a reference image, which can be defined in different ways.

The first method adopted was that of considering as a reference image the first image stored immediately after starting the test: each of the successive images will then be compared with this image in order to observe the possible presence of differences, which in all probability may be due to the formation of a failure.

By contrast, it is intuitive to immediately deduce the main difficulties encountered in the development of the software: firstly, ideally the two comparison images should be absolutely identical, with the exception of course of the difference observed due to the failure.

This never occurs because, apart from all of the variables that come into play when the image is captured, the luminous intensities recorded by a given sensor pixel will never be exactly the same from one image to another: in other words, if over time the intensity value recorded by a given pixel is observed, by itself it already manifests slight oscillations, even with the machine and the pneumatic tyre stationary and the camera fixed, i.e., beyond the test conditions.

Added to all of this is a long series of factors, which goes towards affecting the repeatability of the intensity recorded by the pixels of the sensor: the illuminator, even though it nominally emits a constant light, may also present some slight fluctuations in the intensity of the radiation emitted that are imperceptible to the human eye, also as a function of the fact that it remains operating for very long periods and therefore undergoes changes in temperature during operation; with regard to the pneumatic tyre, each of the radial cross-sections thereof undergoes periodic crushing against the drum upon which it is turning, whereby each section is deformed to then return to the original shape thereof, and, due to the effect of these continuous movements, the profile of the sidewall can therefore show itself to the camera with slight differences in shape from one revolution to the next; precisely due to the periodic stress to which it is subjected, the sidewall is made to undergo the mechanical phenomenon of fatigue, so that the structure thereof during the test may present gradual subsidence and consequent variations in the shape of the profile, thus reflecting the light toward the camera at different angles; the same camera, being mounted on the machine, may be subject to vibration during the test, even though imperceptible within the image; depending on the type of support upon which it is mounted, the latter, precisely as a result of the continuous vibrations, may be subject to slight displacements, which are again not evident within the image; finally, in general also the ambient light can vary.

To this list of factors, which induce variability in the intensity values of the pixels simply starting from the image capture procedures and conditions, there must subsequently be added those factors that are due to having to process each image in performing a series of operations which lead to changes in the intensity values of the pixels and to the generation of parts of the image by means of interpolation therebetween: this means that the image is in part artificially altered by introducing additional causes of variability in the values of the pixels from one image to another.

The processing operations in question (which will be described in detail below) are those necessary in order to obtain images that are as similar as possible therebetween, so as to be able to compare them with each other in a reliable manner: for the reasons mentioned, an attempt is made to limit the use of them to the minimum necessary, but, as will be intuitive from the description thereof, it is not possible to disregard them completely.

Finally, a further deviation from the ideal operation of the algorithm relates to the aspect of the observation of the differences between the reference image and the sample image (which henceforth will be also indicated by the name "current image", insofar as it is the most recent image captured during the test and therefore representative of the current state of the pneumatic tyre).

In fact, the formation of a failure is not the only difference that can be detected in the comparison between the two images, insofar as the appearance of the pneumatic tyre during the course of the test can undergo transformations: due both to the rotation on the drum and the rubbing of the bead on the rim, during the first phase of the test small scattered rubber shavings can be progressively deposited upon the sidewall; in the same way, a deposit of rubbery material may form at the sides of the tread; any drops of oil from the mechanical parts can land on the sidewall and form small castings due to centrifugal force; dust can be deposited on the sidewall; other alterations to the aspect of the sidewall surface can occur when the pneumatic tyre is touched in order to conduct a visual inspection.

It must be said that these events occur quite rarely, with the exception, however, of the deposit of shavings on the sidewall and of the material at the sides of the tread, which instead takes place regularly and which constitutes a major cause of false positives generated by the image analysis step, together with pin vents. The latter are small rubber pins distributed on the sidewall, which are formed during the molding of the pneumatic tyre: this in fact expands within the mold fully occupying it, and therefore within the mold small holes are provided in order to vent the air previously contained within the mold; when the pneumatic tyre is forced by means of inflation against the walls of the mold, small amounts of rubber penetrate into the holes, forming pins.

During the test, due to the combined effect of the centrifugal force and of the action of the air, the pins tend to move randomly and can therefore appear in different positions from one image to another, thereby giving rise to false positives. The processing and image analysis steps comprise, amongst others, specific operations that are performed in order to compensate for the identified disturbance factors, in particular those that are the most incisive.

Image processing

The capture software returns images that have a series of characteristics: firstly, they are arranged according to a vertical orientation; usually, in addition to the entire sidewall, they also present a certain dark margin externally to the tread and, on the opposite side, the edge of the rim upon which the pneumatic tyre is mounted, which are unnecessary portions for the purpose of the subsequent analysis, but it is appropriate to include them in order to be sure to capture the entire sidewall.

In the case of two cameras (used to contemporaneously capture the two sidewalls) they are preferably positioned at the same radial section and frontally to one another on opposite sides, one of the two images is composed in the correct direction, i.e., in the direction that makes the wording readable, whilst on the opposite side it is reversed, i.e., with the wording back-to-front: this effect is corrected by flipping the image within the capture program (alternatively the camera could be mounted upside down).

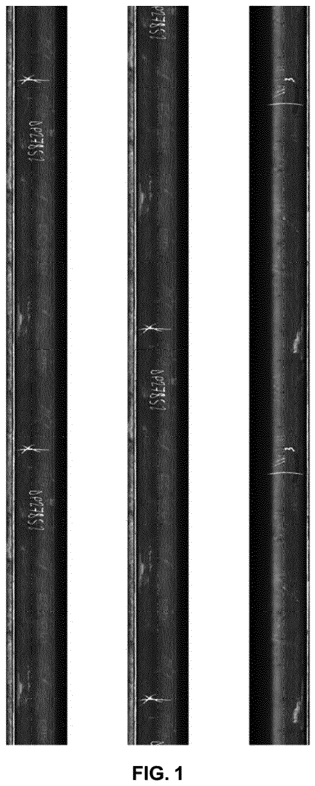

However, apart from this aspect, the fact that the cameras are located opposite one another causes the edge of the rim to lie on the left side within the images coming from one side, and on the right side in those coming from the other side. Finally, it should be noted that the vision system is devoid of an encoder; as a result, the capturing of the images is regulated exclusively by means of timing: this means that once the predefined time interval elapses, the acquisition of the next image begins regardless of the angular position of the pneumatic tyre, and therefore the start and end points of the image will be random, rather than always the same. Consequently, the images present a misalignment, a shift, one with respect to the other, and vice versa (Figure 1).

All of this leads to the understanding that raw images, i.e., the images provided by the capture software, are decidedly different therebetween and cannot therefore be compared. The main purpose of the preprocessing step is to make all of the images saved in the memory comparable to each other, and this is equivalent to being able to manage all of the aspects listed above.

Following the processing, the images: must be horizontally oriented and preferably legible, i.e., it is appropriate for the final images not to be upside down; they must only contain the useful portion of the image, namely that portion that actually shows the state of the pneumatic tyre, removing the margin corresponding to the regions beyond the tread and the rim; they must have the same dimensions in length and in height and present the same start and end points; furthermore, it is required that these points both correspond to the same radial section of the pneumatic tyre, i.e., it is required that the image contains exactly one revolution of the wheel. The processing is then performed in such a way as to maintain only the essential part of the raw image wherein the necessary information is actually contained: this reduces the size thereof to a minimum, which is understood to be the storage volume, whereby, also at the computational level, the amount of data to be processed will be less.

When proceeding to the extrapolation of the image of a single revolution of the wheel, whilst identifying the exact angular position that constitutes the beginning and the end thereof, the various images have a slightly different length one from another: this is due to the fact that the rotating drum of the test machine used is unable to ensure with accuracy an extremely constant speed of rotation; for this reason the latter is subject to slight fluctuations over time that lead to a revolution that always corresponds to a different number of lines.

Even if when observing the display, the effect is not noticeable, it is necessary for each sample image to be slightly stretched or compressed in order to be made the same length as the reference image, so that they can be compared.

As a result of these operations for correcting the dimensions of the image, an adjustment to the brightness of the pixels should then be applied, with respect to the reference image, preferably a brightness correction in order to compensate for the already described variations in luminous intensity, in particular as regards the deformations that the profile progressively undergoes during the test, which result in slight modifications to the profile of the illuminated surface: consequently, the directions in which the light rays are reflected and arrive on the sensor are different from the initial directions.

With reference to Figure 1 an example of raw images is shown. On the left and in the center, two images taken on the same sidewall at different times, that show the misalignment in terms of angular position. On the left and on the right, two images from opposite sidewalls, which show the different position of the rim.

Bearing in mind that during the subsequent image analysis step a Harris corner search is performed, it may be appropriate to take advantage of the brightness correction in order to contextually induce even a slight increase in contrast, applying corrections of different magnitudes between light and dark regions: insofar as the corners are identified by points that are characterized by high pixel intensity gradients, this can be useful in ensuring that it is associated with a greater number of corners at a crack, and therefore the latter has a greater likelihood of being detected.

It should be emphasized that the brightness correction is carried out only with respect to the mean values of the entire image, or more than individual lines: it can clearly be performed pixel by pixel, firstly because operating at such a level of detail would have a computational cost that is not justified by the benefits.

Secondly, it is not a practicable solution, because it is meaningless: as previously mentioned, the basic idea is to make a comparison between two images taken at different instants, it therefore makes no sense to attribute to each pixel of the current image the value that it had on the reference image, because in that case a possible comparison would not lead to any outcome, having artificially made all of the pixels have the same values; furthermore, a correction of this kind should be applied only to those pixels that are unrelated to failures, because otherwise the latter would disappear from the image, but in order to do this then where they are located would have to be known, which instead is precisely the unknown element of the problem.

What makes sense instead is that, having to perform a comparison, this is run in such a way that at the same point there is on average the same brightness in both comparison images: in other words, ideally the pixels should present consistent variations in intensity only due to the appearance of an object (such as the formation of a failure), and not because, for external reasons, the lighting conditions change, albeit only slightly.

At this point, following all of the operations listed, the reference image and the current image are almost exactly the same, except, theoretically, for the presence of failure. In the case wherein a quantitative estimate of the size of the failure is also of interest, it is however necessary to provide for a further transformation of the image, which consists in applying stretching to the image, making it have a square and therefore realistic resolution, i.e., the same resolution, in terms of pixels/mm, in the horizontal direction and in the vertical direction.

This operation is indispensable in order to correctly estimate the length and the opening of a crack, which would otherwise be distorted, going on to affect a possible classification and collection of data regarding the evolution of cracks.

Hereinafter there will be described in detail the strategies by means of which various operations can be completed on the image, following for the moment the basic methods used in the first version of the crack detection software developed as part of the thesis. the respective variants or alternatives will also be subsequently introduced separately.

First possible rotation method

As previously mentioned, the rotation of the image may be necessary when it is captured with a vertical orientation, whilst, for better comprehension and visibility when observed on the display in order to facilitate remote inspection, it is preferable for the orientation be horizontal.

This is the first operation that is performed as soon as the software withdraws the raw image that is deposited in memory by the capture program.

The most obvious indication to be exploited, so that the program may rotate the image, consists in that, in this case, the length of the image will always be greater than the height thereof, even in the case where all of the 2048 pixels of the sensor are used for capturing the image. The solution could thus appear to be straightforward, insofar as it seems sufficient to apply a rotation of 90° degrees to the image, thereby transposing the matrix that composes it.

The problem, however, becomes complicated when recalling that the two sidewalls of the pneumatic tyre originate images wherein the rim can be located on one side of the image or on the other side: it is clear that providing for manual intervention in order to decide which way to rotate the image is not a practical solution, and in the same way it makes little sense to differentiate the program code according to the sidewall being processed.

In order to ensure operation by means of one program, it is therefore necessary that the code be capable of autonomously detecting where the edge of the rim is located and accordingly deciding whether to apply the aforementioned 90° rotation in a clockwise or anticlockwise direction, definitively avoiding the possibility of the image appearing upside down.

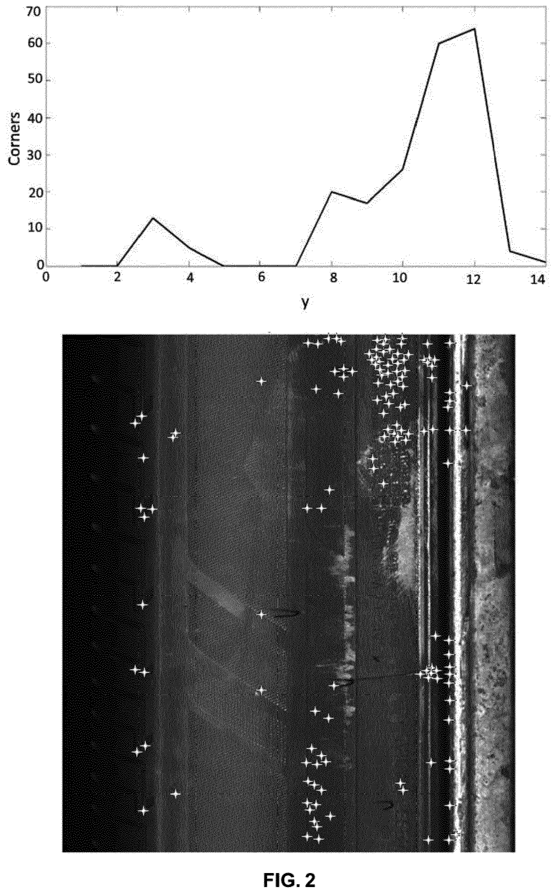

A first method subdivides the image into thin circumferential portions, characterized by a predetermined radial height (e.g., one hundred pixels), and counts the number of Harris corners contained within each of these portions (Figure 2). Insofar as the circle is a reflective surface, it generates the presence of a large number of corners, and therefore it is expected that the strip which contains it is the one that has the highest amount. This feature identifies the approximate position of the edge of the rim and is therefore sufficient in order to determine upon which side of the image it is located, and in conclusion to decide in which direction to rotate the image.

At this point, the orientation of the image is therefore fixed, and it makes sense to identify the tangential direction of the pneumatic tyre with horizontal direction of the image, and similarly the radial direction with the vertical direction. The procedure described so far must necessarily be applied to the first image acquired during the test, i.e., the image that will become the reference image.

With regard to the subsequent sample images, which will clearly be returned from the acquisition always with the same orientation as the first, it can nonetheless be chosen to repeat the process, or, in order to streamline the processing of the program (the search for the Harris corners over the entire image involves a considerable computational processing), the data concerning the angle of rotation determined for the first image can simply be stored and recalled for all subsequent images, thereby avoiding the need to recalculate it.

An example of searching for the approximate position of the edge of the rim is shown in Figure 2. The small green crosses represent the Harris corners. For better visibility, only a portion of the image is shown, while the graph refers to the entire image.

Therefore, the method according to the present invention can provide for the pre-processing to comprise a step of rotating and/or tilting said overall images, preferably in order to exactly isolate the surface of said pneumatic tyre.

First possible method for cropping

The previously described procedure identifies the approximate position of the edge of the rim. This information can be exploited to also contextually search for the rim line, i.e., the exact location thereof, which is instead necessary in order to correctly crop the image, removing unnecessary regions.

In this case, the appropriate characteristic to be exploited for such search is the darkest tangential line contained within the portion that identifies the approximate position of the rim: this dark line is in fact recurrent within all of the images, insofar as it is due to the point wherein the bead of the pneumatic tyre enters into the rim; the profiles of the two elements in contact are such to form a cusp that cannot be illuminated throughout the depth thereof, and therefore a shadow zone is formed which results in a dark line on the image.

In choosing a sufficiently small radial height for the subdivision of the image into thin portions, the risk of selecting an incorrect line is reduced to a minimum, insofar as it is considered to be a point that is smaller than this line, which, based on what has been said, will almost certainly be brighter.

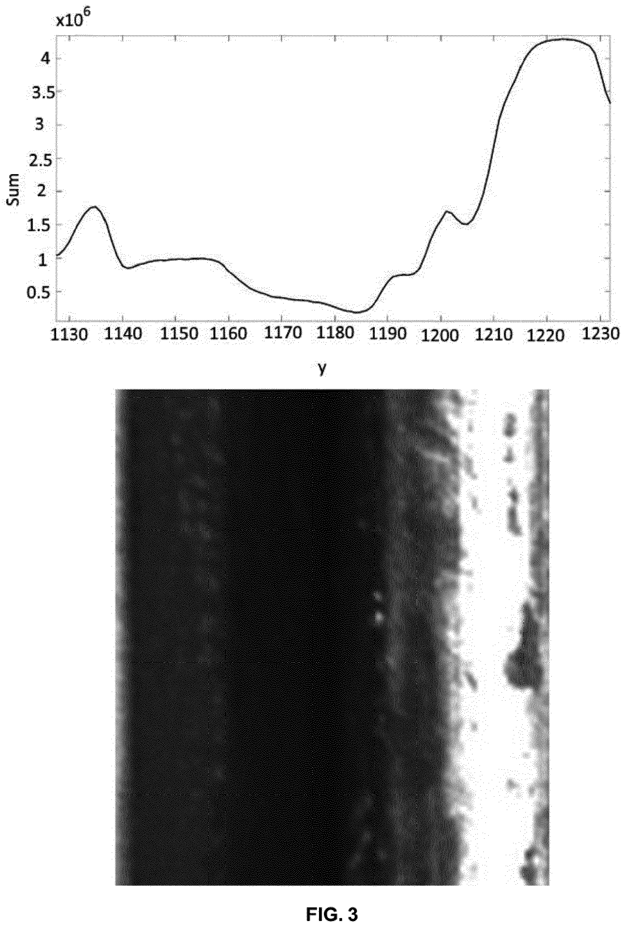

To find the line of the circle, it is then sufficient to identify, within the portion of previously captured image that is assumed to be the approximate position of the edge of the rim, the horizontal line characterized by the lowest sum of the intensities of the pixels (or equivalently from the mean thereof, all the lines comprising the same number of pixels), (Figure 3).

Figure 3 shows an example of search for the exact position of the edge of the rim. For better visibility, only a portion of the image is shown, while the graph refers to the entire image. This in practice eliminates the dark margin present within the image.

Having noted this line, the portion of the image at the bottom thereof is removed, thereby eliminating the zone that incorporates the rim. Regarding the search for the tread line, the problem is resolved much more simply because, in the specific application, the tread region is not of interest for the purposes of analyzing the image, and therefore it is not important to crop the image with the same level of accuracy required for the rim line.

In particular, only that portion of the image that can be considered visible is to be retained, i.e., sufficiently bright; as a result, any removal is limited to the portion of the image above the horizontal line characterized by an average pixel intensity that is higher than a given predetermined upper threshold value:

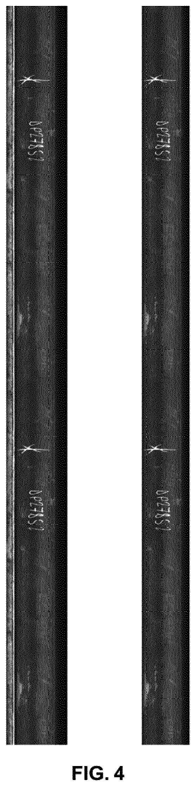

The overall effect of the two removal operations described can be seen in Figure 4: in this regard it should be stressed that the images are shown vertically oriented in order to appear more detailed under observation, but internally to the algorithm they are by now considered to be horizontally oriented, as of the completion of the rotation operation.

This figure shows the removal of the rim (on the left of the image) and of the dark margin on the opposite side.

Also in this case, the execution of the procedure is strictly necessary only for the reference image, whose rim and tread lines' coordinates can be stored and recalled in order to process subsequent images. This reduces the number of calculations to be performed by the computer; nevertheless, it is advisable to repeat the procedure for every single image of the test: as a matter of fact, employing the same reference data deriving from the reference image can lead to slight errors in cropping in correspondence with the tread, because in some tests it can be found that the sidewalls of the pneumatic tyre can be subjected to slight yielding due to fatigue, or else there may be losses of pressure; it is thus possible for the tread line to progressively tend to fall, even though this does not always happen.

In any case, in order to keep calculation times short, repeating only the less onerous search of the two may be considered, namely that of the tread line, insofar as the rim is a non-deformable element, and it is therefore reasonable to expect that the corresponding line does not move.

First possible method for alignment

The alignment operation completes that of the cropping as it removes parts of the image with respect to the two sides that have not yet been affected by any modification, performing two cuts along the vertical direction (i.e., along the short sides).

In particular, these cuts must be made at the same angular position, in such a way as to extrapolate exactly a single revolution of the wheel and at the same time align the images therebetween, attributing the same start and end points to all of the images.

This is the operation that replaces the function of an encoder and is by far the most difficult and delicate of the entire pre-processing step, because it must necessarily be performed on every single scanned image, and therefore a method is required that ensures high repeatability so that it will function correctly with such a large number of images (usually for an endurance test, because of the long duration and the reduced sampling intervals, at least six hundred images are captured).

The first strategy adopted in order to obtain alignment requires the identification of the vertical line characterized by the highest standard deviation of the intensities of the pixels along the entire image. The latter corresponds to the square root of the variance, and for a population of N values, it is given by Equation 3.1 (which can sometimes be normalized with respect to N instead of to N-1):

$$\sigma_x = \sqrt{\frac{1}{N-1}\sum_{i=1}^{N}\left|x_i - \overline{x}\right|^2} \tag{3.1}$$

where $\overline{x}$ is the mean value of the $N$ data points:

$$\overline{x} = \frac{1}{N}\sum_{i=1}^{N} x_i \tag{3.2}$$

The standard deviation expresses the dispersion of a series of data points, i.e., the variability thereof: to identify the line of pixels having the highest standard deviation is thus equivalent to considering the line with the greater variability in values, which renders it interpretable, from a certain point of view, as the most characterized and distinctive of the entire image.

Given the manner in which the capturing is performed, this line coincides with a precise angular position, and is therefore taken as a reference point: comparing it then with all of the others that form the image, the most similar amongst them is identified which can therefore be reasonably assumed to have been captured at the same angular position, but at the distance of a circumference, i.e., a revolution of the wheel before or after.

In order to achieve alignment thereof, the reference line must be the same for all of the images: this means that the search for it should only be performed for the first image of the test; vice versa, if it were also repeated on each of the subsequent images, due to the variability of the values recorded by the pixels, it is possible that a different line would be selected.

For this reason, it is appropriate to store the reference line identified for the first image and to use it to find the two lines that are most similar thereto amidst all of those that compose the subsequent images. Alternatively, only the most similar can be identified and assumed as a new reference for the search for the second.

In any case, it can easily be deduced that the radial section corresponding to the reference line must necessarily appear twice within the same image in such a way that it may comprise both the initial and the final point of the image, thus extrapolating exactly one complete revolution of the pneumatic tyre.

The reference line is established automatically by the program; hence, it is not known before the test to which angular position it corresponds: as a result, all of the angular positions, i.e., the entire circumference, must appear twice within an image, which in other words means necessarily having to capture two revolutions of the wheel at a time.

Although this implies a substantial increase in the memory required and in the number of calculations to be performed, it is the only way to obtain a continuous image of a revolution of the wheel, that is composed of a flow of continuous lines.

Conversely, if it is chosen to acquire a single revolution at a time, alignment of the image can nonetheless be obtained, identifying the reference line and reversing the order of the two portions that determines it to the left and right thereof.

In other words, the portion of the image that extends from the first line to the reference line should be moved to after the portion that extends from the reference line up to the last line. With this way of proceeding, there would however be two drawbacks: firstly, due to the effect of micro-movements of the camera or of the mechanical parts of the test machine, a small step of a few pixels might present itself at the junction along the radial direction, thereby obtaining a discontinuous image, even if not so evident at a visual level; furthermore, due to slight fluctuations in the speed of rotation of the drum of the machine, in the moment wherein there is a slowing down in the number of consecutive lines to be acquired, if set for exactly one revolution of the wheel at the rated speed, the image may be incomplete by just a few millimeters with respect to the circumference; the opposite case would instead be remediable, as it would give rise to the duplication of a thin circumferential portion of the sidewall, which could be avoided with a search for the repeated lines in an analogous manner to that described previously.

The comparison between the lines takes place by means of the linear correlation coefficient, or Pearson correlation, that for a population of N jointed observations is expressed by equation 3.3:

$$\rho_{xy} = \frac{\sigma_{xy}}{\sigma_x \sigma_y} = \frac{1}{N-1} \sum_{i=1}^{N} \left( \frac{x_i - \overline{x}}{\sigma_x} \right) \left( \frac{y_i - \overline{y}}{\sigma_x} \right) \tag{3.3}$$

where $\sigma_x \sigma_y$ is the covariance of the two series of values, which is a parameter indicative of dependency therebetween.

It is assumed that those lines that have the maximum correlation coefficient value with respect to the reference line correspond to the same angular position as the latter: one of the two lines thus identified then marks the starting point of the revolution of the wheel, and the other the final revolution, and in conclusion the raw image is cut in correspondence with those points.

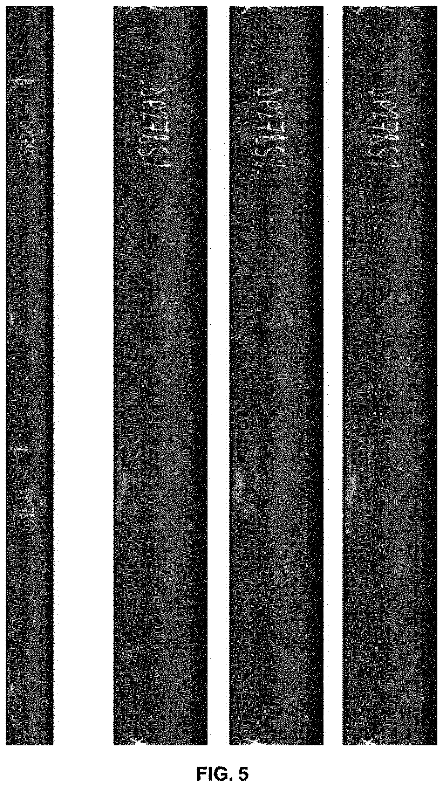

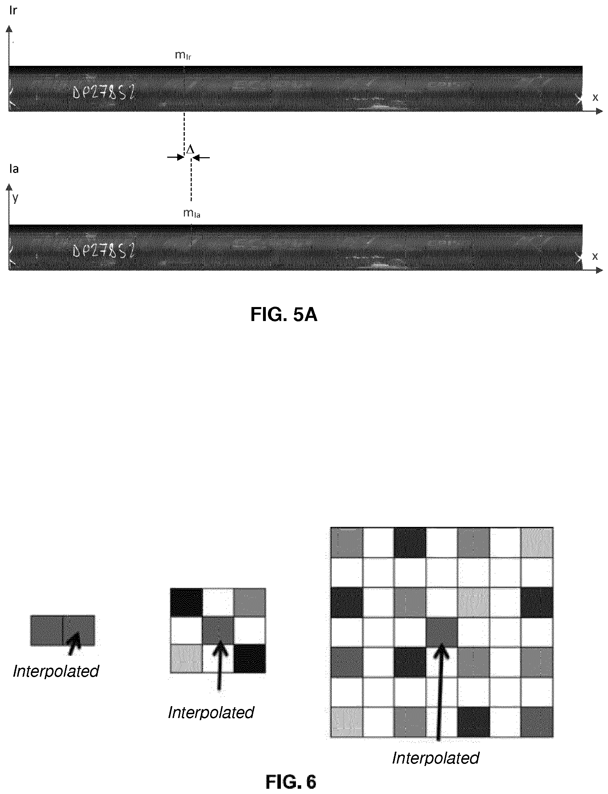

Figure 5 shows an example of the extrapolation of one revolution of a wheel, and shows the effectiveness of the alignment in comparing various images of the same sidewall acquired at different moments in time: it can be observed how, after these operations, all of the images look identical under observation.

The main limitations of this method consist in the fact that within the image lines can nonetheless exist therebetween that are similar but corresponding to radial sections that are extraneous from one another and from which, therefore, a mismatch may arise: it is sometimes due to the fact that the reference line belongs to an element of the sidewall, such as a marker or stamped inscription, which has a certain extension in a tangential direction, and in this case, the error consists in a deviation of a reduced number of pixels, being negligible within certain limits; at other times the error is instead derived from elements that are already similar which, as a result of slight progressive transformations such as the sagging of the sidewall of the pneumatic tyre, together with a certain variability in the values recorded by the sensor (as previously described), tend to increase the reciprocal similarity thereof, making the program select different angular positions.

The latter aspect leads the method to be characterized by very high but not total repeatability, obtaining in rare cases an incorrect result. Consequently, among the operations that are performed during the image processing step, the operation of alignment and extrapolation of a revolution of the wheel was the one upon which most effort was concentrated in searching for alternative methods, which would reduce even further the margin of residual error, but each of these inevitably presents a failure rate, albeit minimal. With reference to Figure 5A, according to the present invention a step is provided wherein it is intended to isolate, for both the reference image Ir and for each overall image Ia, the pixel matrix that has the maximum variance in grayscale values in the y direction, respectively indicated with $m_{Ir}$ and $m_{Ia}$ in Figure 5A.

It may be noted that, in characterizing the pixel matrices in the y direction by means of the variance in the gray scale values, said pixel matrices then become invariant in time, i.e., on a sequence of images.

It is therefore possible to improve the spatial correspondence between Ir and Ia in moving Ia in the x direction for the difference $\Delta = xm_{Ia} - xm_{Ir}$.

Improving the spatial correspondence between Ir and Ia, in turn, reduces the rate of detection of false errors.

Furthermore, the processing described herein provides the possibility of obtaining as consecutive images, i.e., images captured at different and consecutive intervals of time, all images that always start from the same line $m_{Ir}$, without any use of external hardware and/or a reference signal in order to activate the cameras.

In other words, when the processing described herein is applied to a set of random images taken at different and consecutive intervals of time by a digital camera that is not activated by any external hardware and/or a reference signal, it is still possible to extract, from the dataset of random images, a subset of coherent and homogeneous data containing images, captured at different and consecutive intervals of time, always starting from the same line $m_{Ir}$.

This makes it possible to avoid the installation of external hardware and/or the provision of reference signals for the activation of the cameras and results in considerable simplification and cost savings.

First possible method for resizing

The purpose of the resizing operation is to make all of the sample images acquired during a test have the same length and the same height as that of the reference image.

In fact, during the pre-processing step, the method according to the present invention provides for the resizing of each overall image in order to normalize the dimensions thereof.

In fact, the images that are obtained following the alignment operation may have slightly different lengths due to slight fluctuations of the speed of rotation of the drum of the testing machine used: as the scanning frequency of the lines at which the camera operates is fixed, any slowing down corresponds to a greater length of the single revolution of the wheel, in terms of the number of lines, and the image is slightly stretched; vice versa, a higher speed corresponds to a compressed image.

As a result, it may be necessary to lengthen or shorten the image. In addition to compensating for these slight variations in speed, the same resizing operation is also exploited in case it is necessary to make the image have a square resolution, i.e., so that the resolution in the horizontal direction is the same as in the vertical direction.

This is an indispensable step whenever it is required to quantitatively estimate the dimensions of a failure, which also opens the possibility of conducting tests characterized by variations in speed.

The images in Figure 6 assume the case wherein the dimensions of the image are doubled, both in width and in height. It may be noted that the nearest-neighbor interpolation, for assigning the value to the interpolated pixel, only takes into consideration just one pre-existing pixel; the bilinear method instead considers four, and the bicubic method considers sixteen.

Generally, transforming the image and making it have square proportions always involves stretching in relation to the initial length and, therefore, also a substantial increase in the occupied memory and the calculation time required due to the significantly greater number of pixels.

In order to avoid running into these disadvantages, the software has been structured in such a way that the two compensations described are performed separately, thus retaining the possibility of choosing, based upon the requirements, whether or not to switch to the square aspect ratio.

In the case wherein enlargement is performed, the final image will obviously be characterized by a number of pixels that is greater than the initial number: this means that the starting pixels will be spaced apart, introducing new pixels that initially did not exist between them and to which a value must therefore be assigned that is consistent with those that are already known. This is performed by means of interpolation, and there are three most commonly used methods (Figure 6). The first is the nearest-neighbor method. This method actually simply assigns to the new intermediate pixel the value of the pre-existing pixel closest thereto. The bilinear interpolation method instead assigns to the new pixel the average value of the adjacent pixels. Finally, there is the bicubic interpolation method, which attributes to the new pixel the average value, weighted with respect to the distances thereof, of the pixels contained within a neighborhood (called kernel) of a certain size.

The nearest-neighbor method, given its simplicity, is faster than the other two, but it is also the least accurate and can easily give rise to artifacts within the images, such as aliasing, which consists in net jaggedness and scaling of the edges of objects. An intermediate interpolation tends to form artifacts such as blurring and halos at the edges.

The method that provides the best interpolation and the best resulting image quality is bicubic interpolation, which explains why it was selected to be effectively used for image resizing.

The first adaptation to be performed is that concerning the height of the image: in fact, image stretching can be implemented either by increasing the length, keeping the height fixed, or vice versa keeping the length fixed and decreasing the height.

The second solution leads however to a partial loss of information, insofar as some of the horizontal rows of pixels captured are eliminated, and therefore it is more logical to resort to an increase in length. Consequently, it is the height that must be corrected first, insofar as it becomes the reference dimension with respect to which the length will have to proportionately increase.

In the case wherein the line of the tread line and that of the circle are calculated only for the reference image and subsequently these same lines are always employed for all subsequent images, it is not necessary to apply any scaling, insofar as all of the images will be cropped according to the same ordinates and will therefore have the same height.

Conversely, in the case wherein either the tread line or the rim line is recalculated for each individual image, the height is always corrected in order to be identical to that of the reference image.

At this point, it is possible to switch to the correction of the length of the image, the factor that has to be used to stretch the image in order to obtain the same resolution both in the radial direction and the circumferential direction. It is calculated from the nominal dimensions of the pneumatic tyre.

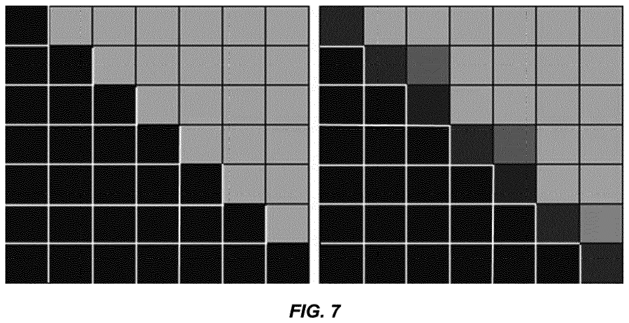

Figure 7 shows, on the left, an example of an image affected by aliasing; on the right, there is the same image obtained with anti-aliasing, which exploits interpolation in order to soften the edges of the elements of the image. It should however be emphasized that, whilst resulting in an aesthetic improvement, there is in fact a reduction in the information contained within the image.

The first magnitude to be calculated is the height $h_{sw}$ of the sidewall:

$$h_{sw} = w_{tread} \frac{AspectRatio}{100} \qquad (3.4)$$

where $w_{tread}$ is the width of the tread, whilst the term aspect ratio refers to the ratio between the height of the sidewall and the width of the tread.

The second required magnitude is the length of the reference circumference, which can be obtained in the way that is deemed most appropriate.

Theoretically, in order to calculate it, the rolling radius should be considered, i.e., the radius in contact with the rotating drum of the machine, insofar as the nominal linear velocity that characterizes the test is applied to this radius, which therefore corresponds to the nominal circumferential resolution.

The rolling radius is not however known with accuracy, as an alternative it is possible to consider the length of the outer circumference of the pneumatic tyre or the average, expressed by Equation 3.5:

$$l_{circ} = 2\pi \left( 25.4 \frac{d_{rim}}{2} + \frac{h_{sw}}{2} \right) \qquad (3.5)$$

where $d_{rim}$ is the diameter of the rim in inches, whilst 25.4 is the conversion factor from inches to millimeters.

In any case, once the length of the circumference to which reference will be made is assumed and determined, it is possible to proceed with the calculation of the new length, in terms of the number of pixels, which should characterize the image after the transformation in order to obtain square proportions.

This length in pixels l_px^' is obtained by means of a simple proportion with respect to the initial value $l_{px}$:

$$l'_{circ} = l_{px} \frac{l_{circ}}{h_{sw}} \qquad (3.6)$$

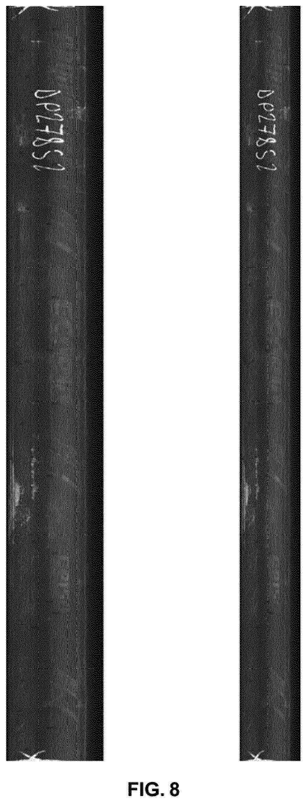

Figure 8 shows an example of an image that has been stretched and made to have the same resolution along the two dimensions. An example is on the other hand not given of the adaptation that compensates for the difference in length due to the fluctuations in velocity of the machinery, nor of the height, insofar as these are modifications to the magnitudes of a small number of pixels that are in fact impossible to comprehend unless there is a way to count the pixels.

First possible method for correcting the brightness

The brightness of the images acquired during the test, in some cases, may vary slightly due to small movements of the camera or of the illuminator, which can be initiated due to the continuous action of the vibrations.

In particular, usually in such cases a gradual darkening of the image can be observed when moving away from the initial location, which is clearly carefully chosen in order to be the best possible.

Since, in the subsequent analysis, step failures are searched for by comparing each sample image with the reference image, which in practice results in performing a subtraction therebetween in order to identify those pixels characterized by high differences with respect to the initial value, it then becomes important that both images have similar brightness, at least on average; otherwise, it would instead be meaningless to attempt a comparison.

To clarify the concept, imagine contemplating a subtraction between a very bright and a very dark image, both containing the same identical scene: all of the pixels would be characterized by a high difference, not because of changes in the scene (such as, for example, the appearance of an object), but due to the different level of brightness; furthermore, a possible variation in the scene may be masked or otherwise hardly detectable within so vast and incisive a region of differences.

It then becomes necessary to attempt to cancel this effect, rendering the images comparable without the measurements of the differences between the pixels being affected by the gap in brightness. The purpose of the operation described in this section is therefore to cause all of the images to be characterized by an equal average brightness, the latter meaning the average value of the intensities of all of the pixels that compose each image.

At the same time, it is desirable to obtain a slight increase in contrast between the background, which is gray in color and therefore falls within the range of mid-tones, and the darkest regions, corresponding above all to the shadows but that are potentially also major indications for finding the possible presence of any cracks, insofar as this type of failure is usually manifested within the image as a darker marking of an elongated shape (a more detailed description is given in the following section "Image Analysis").

This is because, given that in the subsequent analysis step cracks are searched for by mapping the Harris corners, an increase in contrast leads to an increase in the abruptness of the luminous intensity gradients along the edges of objects, and this makes the identification of the corners more likely.

The simplest idea for causing the sample image to have the same average brightness as the reference image consists in adding to each pixel the difference that exists between the two average values of intensity.

It is clear however that in this way each pixel varies by the same amount by which the others vary, and therefore no contrast is added. It is then possible to consider differentiating those increments (or decrements) that characterize each pixel as a function of the intensity value thereof: preferably therefore, the pre-processing step involves an adjustment to the contrast of the pixels in relation to the reference image by using a purpose built function, and it must be such that, after the transformation, the same average brightness value is obtained as that of the reference image.

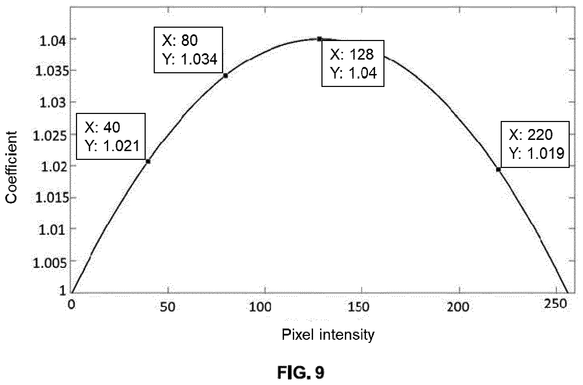

Figure 9 shows the graph of the adopted function comprising a parabola: those values that a pixel can assume within an 8-bit monochrome image (in grayscale) are arranged on the abscissa, wherein the range from 0 to 255 is considered; the ordinate axis gives the value of a coefficient of increase, which will then become a multiplying factor for all of those pixels that initially have the abscissa value corresponding thereto.

Consider the following example: assume that there is a pixel within one of the images subsequent to the first and having an intensity equal to 80; entering on the graph with this value on the abscissa, a coefficient is read on the ordinate axis equal to 1,034; this means that, after the transformation, all pixels initially characterized by an intensity equal to 80 assume the following value (to be rounded because the pixels cannot have non-integer values):

$$80 \cdot 1.034 = 82.72 \approx 83$$

It is apparent then that to those pixels with an intensity of 80 an increase of three units will be assigned. Similarly, to those with an intensity of 40 an increase of one unit will be applied:

$$40 \cdot 1.021 = 40.84 \approx 41$$

It can then be deduced that the increase attributed to the pixels thus becomes dependent upon the value of the initial intensity thereof. The function shown in the graph is symmetrical with respect to the central value 128 of the range of values that the pixels can assume. Based on what has been said, it can be concluded that: for abscissa values in the range 0 ÷ 128, the higher the initial intensity value of the pixel the greater the increase that will be attributed thereto; in the range 128 ÷ 255, the exact opposite will apply.

Consequently, the mid-tones, corresponding in fact to the grays that make up the background of the image and that are hence present in a very large majority, will have the greatest increases, and therefore become the main protagonists in the equalization of the average brightness value between the thus corrected image and the reference image; minor increases are instead attributed to the dark tones, and consequently there is an increase in contrast between these and the mid-tones, that is to say between the dark regions and the background.

With regard to the construction of the function, as anticipated, the equation of a parabola is used because, if it is assumed that the extreme values of the range, 0 and 255 (black and white pixels respectively), are to remain unchanged, this the easiest hypothesis from which to start. To consider a horizontal line signifies returning to the case wherein the same increase is applied to all of the pixels without obtaining an increase in contrast; the use of a straight line or several oblique straight lines to approximate the parabola would instead imply having to arbitrarily choose the slope or else the intercept; there would also be the advantage of obtaining an increase in contrast between medium and light tones, but the increase in brightness would also be attributed considerably to the latter, with the risk of excessive lightening of some regions; furthermore, the increases in the values of the pixels would be obtained according to a linear proportion, whilst it may be useful to differentiate such a proportion between the different bands of tones.

In summary, as a first approach it appears to be more convenient to take the extreme values of the range as reference points to be maintained as fixed, insofar as the pixels cannot assume values less than or greater than these extremes, and to define a single continuous function for the entire range 0 ÷ 255.

Both at a mathematical and code writing level, the simplest choice then consists in a parabola, which in particular is symmetrical within such a range and with the axis thereof parallel to the ordinate axis, it is therefore defined by Equation 3.7:

$$y = ax^2 + bx + c \qquad (3.7)$$

The construction thereof is implemented by using the method for the determination of the parabola passing through three points, which involves replacing the pairs of coordinates that identify these points in the general equation, thus forming a system of three equations in the three unknown elements a, b, c, from the solutions of which the coefficients of the parabola are obtained, which is therefore completely defined.

It is useful to remember that the coefficient a is representative of the concavity of the parabola; it is positive in the case of upward concavity, and the greater the absolute value thereof, the narrower it is; the coefficient b is representative of the slope with which the parabola intersects the ordinate axis; the coefficient c represents the ordinate value corresponding to x = 0, i.e., the point at which it intersects the ordinate axis.

The first case to be considered is the one where the image is darker than the reference image, and there is therefore the need to increase the pixel intensity in order to make it brighter.

In this case, in order to define the three points, it is assumed that those pixels with the values 0 and 255, i.e., those that are white and black, should remain as such; no modification to the value thereof is therefore to be applied; this means that a unitary multiplication factor must be applied to these, and this defines two of the three necessary points.

Regarding the third, it should be recalled that the primary objective is to cause the image subjected to a correction in brightness to have the same average intensity value as the reference image: as a consequence, it is not possible to easily predetermine the third point.

If, however, it is required for simplicity to construct a symmetrical function with respect to the central value 128, then the latter can be fixed as the abscissa of the third point, since, imposing symmetry upon the function, with the two extreme points being known, is equivalent to establishing that the vertex of the parabola must be located at such an abscissa. In summary, based on what has been stated, the known coordinates of the three points are, so far:

$$P_1 \equiv (0,1)$$
$$P_2 \equiv (255,1) \qquad (3.8)$$
$$P_3 \equiv (128, y_3)$$

The value of $y_3$ should be chosen in such a way that the average intensity of the image after correction is approximately equal to the average intensity of the reference image. In order to determine this, we proceed iteratively, imposing as a first attempt value $y_3 = 1$: the coefficients of the parabola are calculated (which in the first attempt is actually a horizontal line that leaves the image unchanged), and by applying the values of the function thus obtained to the various pixels, according to the previously explained modes, the image is obtained with modified brightness, of which it is finally possible to calculate the average intensity; if the latter is less than that of the reference, we proceed with a new iteration, increasing the value that is assigned to $y_3$ and thereby raising the vertex of the parabola upwards; the iterations are stopped as soon as the average intensity of the adjusted image becomes greater than the reference image.

Ultimately, it can be stated that, in the case where there is a need to lighten the image, the brightness of the midtones is increased to a greater extent than the low tones, thereby favoring a slight increase in contrast between the background and any dark objects at the expense of a slight reduction in contrast between the background and light objects, insofar as a higher probability is attributed to the former of corresponding to a crack.

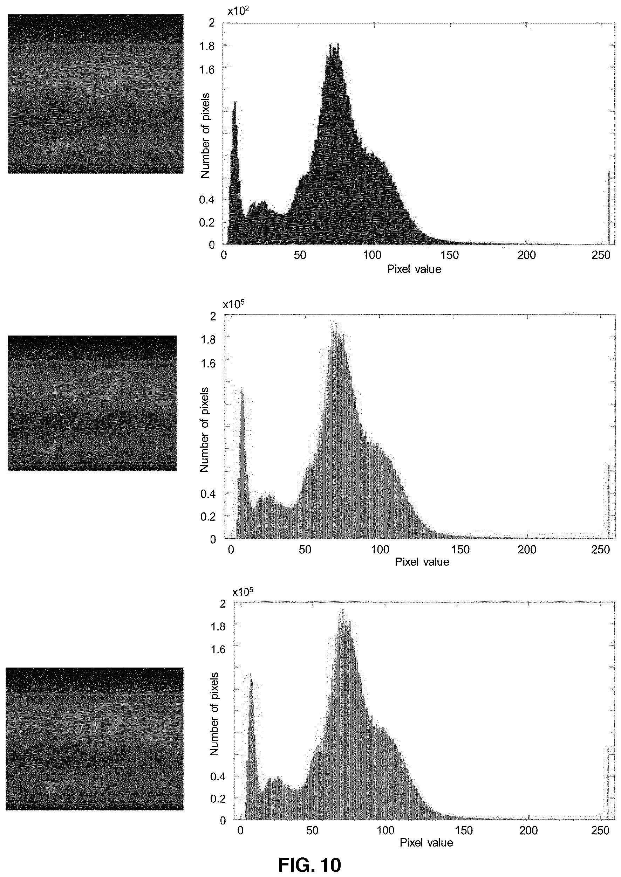

Figure 10 shows an example wherein the image is rendered clearer and, it being difficult to comprehend the difference in brightness, the images are accompanied by the respective histograms thereof that, after correction, highlight the shift of the mid-tones towards the lighter tones, together with better overlapping of the progressions and better matching of the peaks.

In the case wherein the image must instead be darkened in order to obtain the same effects, a parabola of the same shape as the previous case is considered, therefore symmetrical with downward concavity, and with the vertical axis located at the abscissa 128.

The only difference is that in this case, in order to reduce the values of the pixels, the multiplication factors must be less than unity. Having to reduce the dark tones to a greater extent than the average tones, in this case the reference points to leave unchanged are lost.

What is performed next is to notionally exchange the roles of the two comparison images, with the assumption of having to lighten the reference image in order to make it have the same average intensity as the sample image, and to perform the same iterative procedure described in the case of increasing the brightness of the image, so as to define the coefficients of the parabola, which at this point temporarily identifies the multiplying factors which are nonetheless greater than unity: this step is therefore aimed at defining the shape of the parabola, which is the optimal shape for compensating for the difference in brightness between the two images, regardless of which is the darkest and which the brightest.

Subsequently, whilst leaving the shape unchanged, it is made to translate downwards in such a way that ordinates less than unity are also brought within the range: this reduction also takes place iteratively, subtracting a progressively increasing amount from the ordinates of the three points through which the parabola is made to pass; the process is stopped as soon as the average intensity of the adjusted image is less than that of the reference image.

In a similar way to the previous case, in order to darken the image the brightness of the dark tones is reduced to a greater extent than the average, thereby obtaining a slight increase in contrast therebetween at the expense of a decrease in contrast between the mid and high tones. This again with the aim of favoring the search for dark objects.

Image analysis

The development of the software and of the respective image analysis method represents the most innovative aspect, in addition to constituting the main challenge and the true ultimate objective thereof: the entire work described so far has been aimed at devising and perfecting a method that is capable of automatically recognizing the presence of defects, in the case of fractures, preferably on the sidewall of the pneumatic tyre.

Therefore, prior to the description of the basic logic implemented in the first version of the program, it would appear to be appropriate to discuss the process that led to the approval of this functionality.

The basic idea is to compare a reference image of the sidewall of the pneumatic tyre with each of the sample images captured subsequently at regular intervals of time.

The first approach was to consider the first image acquired at the start of the test to be the reference image, thereby assuming as a yardstick the "virgin" state of the pneumatic tyre. The comparison of each pair of images cannot be performed by means of the comparison of each single pixel, insofar as it would be an extremely inefficient process due to the high amount of data to be processed, and also inaccurate, insofar as the images cannot inevitably be precise to the point of always corresponding to the same pixel at the same position: given the resolution in play, whereby a pixel corresponds to a few tenths of a millimeter, it is unthinkable that a pixel should always re-assume the same angular position of the wheel with such precision, or that the speed of rotation should be so stable as to ensure such a result.

The approach was therefore to define a digital signature of the image: this term, in the field of electronics and communications, refers to a mathematical pattern having the function of ensuring the authenticity of a document in electronic format; in other words, it is a feature that makes it possible to identify a document and to certify that it has not been altered.

Given this definition, it is therefore evident that, in the case of an image, the invariant points thereof have the full potential to form the digital signature thereof. Ultimately then, rather than individual pixels, the respective digital signatures of the two images are compared, searching for invariants present within the current image but not within the reference image: insofar as a crack appears as a dark cuneiform object on the image, and furthermore assumes a jagged perimeter as a result of propagation, whereby it is expected that the formation thereof gives rise to new invariants that were not previously present.

Evaluation of the recognition method

The first step in developing the recognition method was initiated in conjunction with the preparation of the vision system, and consequently did not have actual images available wherein fractures were present on the sidewall of the pneumatic tyres. On the other hand, however, there was the need to identify a method and to test the operation of a large number of tests in order to be able to collect the results in statistical form, from which to be able to derive evaluations concerning the operation and effectiveness thereof.

This suggested the idea of selecting a pair of images (obtained from test acquisitions using the vision system) of the same pneumatic tyre taken at different moments in time, and to artificially apply a fake crack to the second image.

The latter was defined in manually extracting from an existing digital photograph the matrix of the intensities of those pixels corresponding to an actual crack, and scaling it to the length selected as the minimum target to be detected. This is stored in a file, and a special routine applies it to the image, overlapping it in a random position and with a random angle, insofar as both of these properties may influence the number of corners generated by the fake crack.

Considering the number of resources and amount of time that conducting an actual fatigue test implies, it is clear that this approach also makes it possible to perform a large number of tests on the detection method, without the need to conduct actual tests on pneumatic tyres.

The randomness of the position and orientation of the fake sipe also makes it possible to evaluate the correct functioning and effectiveness of the method, insofar as a very high number of tests ensures that it is positioned within all of the regions of the sidewall, from those with a flat and uniform background to those that are most complex. In summary, the use of fake cracks made it possible to perform many tests on the code, exploring the reliability thereof: this made it possible to test the detection strategy and to gradually develop it.

Selection of the feature recognition algorithm

Given the wide variety of algorithms for feature and object detection for the purpose of the development of the method, a preliminary study and running several tests were necessary in order to select the most appropriate one for the specific application.

The choice was mainly in relation to the Scale Invariant Feature Transform (SIFT) invariant features detector and the Harris-corner detector. On the basis of what can be learned in the literature, the former turns out to be more robust than the competitor, which means that it is capable of ensuring greater repeatability in the recognition of invariants.

By contrast, however, in the tests conducted using the fake crack, the SIFT algorithm showed that, with the same parameter settings (for example, the quality threshold) optimized for each algorithm, it identified a lower number of characteristic points on the crack than the Harris algorithm.

This is a key benefit insofar since, for the purposes of better detection, it is important to obtain a significant number of corners.

For this reason, and due to the fact that in this case there is no need for any invariance in rotation, scale, and other related transformations, the Harris algorithm was chosen: this means that the digital signature of the image will be the distribution of the Harris corners that can be detected thereupon.

Further advantages of this choice consist in a simpler implementation and shorter execution times: the latter, though not essential, is an aspect that is nonetheless important insofar as the shorter the execution time, the higher the image sampling frequency can be, which in practice is equivalent to reducing the amount of time and mileage that exists between one inspection and another of the pneumatic tyre under test.

Calibration of the parameters

In order to discriminate between those to be validated and those to be discriminated the Harris method defines a threshold of quality for the corners. This parameter should be set at the most appropriate value so that good detection is obtained within the application.

In order to contextualize the role of the quality parameter, a brief reminder is useful in recalling that the Harris method involves the calculation of the following matrix:

$$M = \sum_{x,y} w(x,y) \begin{bmatrix} I_x^2 & I_x I_y \\ I_x I_y & I_y^2 \end{bmatrix} \qquad (3.9)$$

where the functions/are the derivatives of the image, i.e., the pixel intensity gradients, whilst w is the "window" function, which is a filtering coefficient matrix.

Subsequently, the following metric is calculated for the characterization of the corner:

$$R = \det M - k(traceM)^2 \qquad (3.10)$$

where $k$ is a sensitivity factor, defined within the range $0 \le k \le 0{:}25$; values are usually used that are between $k = 0.04 \div 0.06$, and by default it is equal to 0.04.

The quality threshold expresses a fraction of the maximum value of the metric R in the image, and represents the minimum acceptable quality so that the corner will not be rejected. Generally, the lower the quality threshold, the greater the number of corners returned, but also in the face of a higher frequency of false positives.

Two other properties are set by the Gaussian filter size and the region of interest. As a function of all these parameters, the algorithm may return decidedly different results even whilst processing the same image.

Therefore, with the aim of optimizing the performance of the algorithm, a series of tests was performed: this means, again with reference to the fake crack, searching for that set of parameters that ensures the best recognition of the defect; obviously such values will be the same for both of the comparison images.

The stability and repeatability of the number of corners are the most important characteristics for the correct operation of the detection method.

Therefore, advantageously, a further step can be envisaged of comparing the number of characteristic and distinctive points (corners) of the portion of the image containing the region corresponding to a potential defect with the number of characteristic and distinctive points of the corresponding portion of the reference image, discarding any detections for which the comparison between the two said numbers of points reveals a deviation that is lower than a predefined validation threshold.

The calibration of the parameters is dependent upon the method with which the search is performed and the correspondence of the Harris characteristics: in order to obtain a greater number of corners that, at the same time, are also of high quality, it was convenient to perform the extraction of the features using small portions, grouping them from time to time until the images were fully analyzed.

In this regard, the method according to the present invention preferably includes a step of cutting the overall image into portions of predefined dimensions, i.e., the two compared images are then virtually divided into radial portions of a fixed width, and the algorithm is executed independently on each portion: this is equivalent to setting a region of interest with the height equal to that of the image and with a customizable width (for example, a thousand pixels).

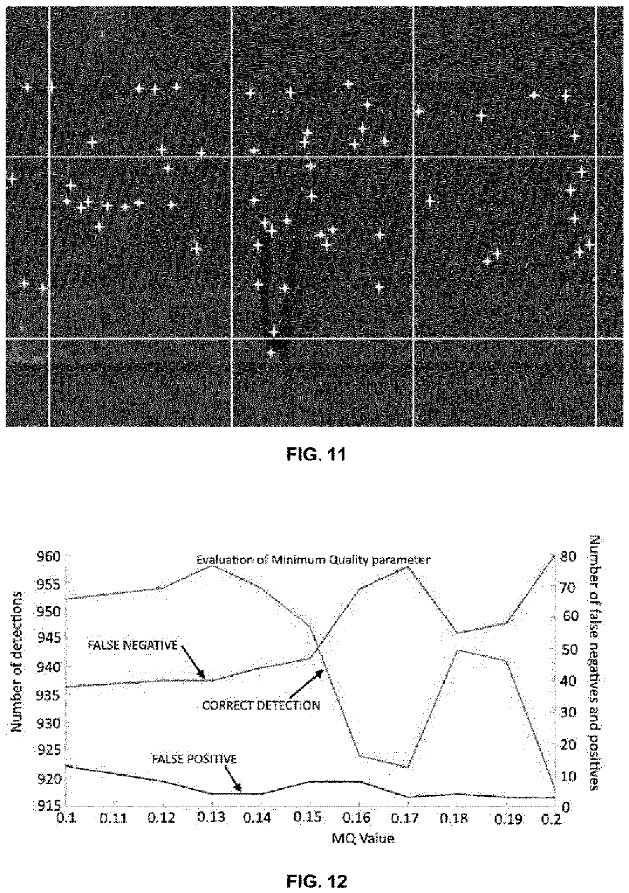

Regarding the size of the filter, the default value was maintained. Under these conditions, the corners are then mapped over the entire image. The correspondence between the two images is searched for using a local count: they are virtually divided into small square cells, each of which will contain a number of corners (Figure 11).

Theoretically, if the method ensures good repeatability, then this quantity does not vary: thereby, when a cell has, in addition to a difference in pixel intensity that is higher than a certain value (resulting from the subtraction of the corresponding cells), also a difference in the number of corners that is greater than a predetermined threshold, it is regarded as a suspicious region, insofar as the variation found could have been caused by an alteration that occurred at the corresponding point on the sidewall of the pneumatic tyre, such as the formation of a crack.

During the code development phase, the dimension for the sides of the square cells was fixed at a hundred pixels as it is suitable for entirely containing the length of the fake crack. The investigation into the quality threshold was conducted while maintaining the fake crack with position and angle fixed on the image in order to evaluate the suitability thereof in generating corners of itself, not yet taking into consideration the interaction thereof with the background.

Under these conditions, it was found that the quality threshold does not affect the number of corners that the algorithm identifies: this is due to the fact that the false sipe is artificially applied to the image, and consequently it has sharp corners along the edges thereof.

The results are summarized in Table 1 listed below.

It may be noted that regardless of the quality threshold, the number of corners found on the fake crack is always equal to seven. When therefore the crack, whether true or false, is found to be in a random position, it is necessary to take account the possibility that it has come to lie on the edge of a cell, and is therefore contained within two adjacent cells, rather than in only one.

This means that the sum of seven corners corresponding to the fake crack, in the worst case scenario, can be divided into three corners within one cell, and four within the adjacent cell: this suggested that three is the minimum corner difference necessary in order to consider a region of the image as being suspected of a potential failure.

Following this assumption, 0.15 was selected as the optimum value for the quality parameter of the corners in the case of cells with one hundred pixels per side, insofar as it ensures a reduced number of regions to be investigated further.

Higher values can be risky insofar as they could excessively reduce the number of corners detected on an actual crack. Both of the choices made for the quality thresholds and the difference in the number of features found, point to minimizing the false positives and false negatives, i.e., the indications of regions unaffected by failure and the lack of reporting failures that were instead present.

Once the best combination of parameters has been identified, it is necessary to consider whether the same crack can generate the same number of corners when positioned on ever differing backgrounds. Intuitively, this number cannot always be the same, but it is important to ensure that in all cases the method identifies a sufficient number of corners.

*Table 1*

| Quality threshold | Corners on the fake crack | Regions presenting an increase in the number of corners > 0 | Regions presenting an increase in the number of corners ≥ 3 |
|---|---|---|---|
| 0.01 | 7 | 250 | 85 |
| 0.02 | 7 | 200 | 49 |
| 0.03 | 7 | 179 | 44 |
| 0.04 | 7 | 157 | 51 |
| 0.05 | 7 | 159 | 47 |
| 0.06 | 7 | 143 | 37 |
| 0.07 | 7 | 118 | 31 |
| 0.08 | 7 | 111 | 25 |
| 0.09 | 7 | 95 | 17 |
| 0.10 | 7 | 85 | 21 |
| 0.11 | 7 | 69 | 11 |
| 0.12 | 7 | 56 | 8 |
| 0.13 | 7 | 58 | 7 |
| 0.14 | 7 | 60 | 7 |
| **0.15** | **7** | **48** | **5** |
| 0.16 | 7 | 41 | 4 |
| 0.17 | 7 | 36 | 2 |
| 0.18 | 7 | 37 | 1 |
| 0.19 | 7 | 32 | 1 |
| 0.20 | 7 | 37 | 3 |
| 0.21 | 7 | 32 | 3 |
| 0.22 | 7 | 26 | 1 |
| 0.23 | 7 | 24 | 1 |
| 0.24 | 7 | 22 | 1 |
| 0.25 | 7 | 19 | 1 |

Sensitivity and robustness evaluation

The analysis of the sensitivity of the method consists in evaluating the effect on the final result of all those changes that are not in relation to the failures, such as variations in brightness, speed or vibration. Whilst pointing out that such variations cannot be canceled completely, the image manipulations described above are intended to neutralize them to the greatest extent possible, with the aim of rendering the conditions wherein the counting of the corners is performed as consistent as they are repeatable.

With regard to the problems of false positives and negatives, it should be stressed that numerous elements, weaves and geometric shapes are stamped on the sidewall of a pneumatic tyre; furthermore, within the context of indoor tests, it is common for pneumatic tyres to be marked by the inscription of internal references.

All of these regions are critical for the purposes of counting, insofar as they generate a very high number of corners and furthermore do so in an unstable manner. This means that for those cells that include such zones there is a large margin wherein it is possible to have a corner difference that is higher than the predetermined threshold: in other words, without the intervention of an alteration, it is very difficult for a region that usually has two corners to arrive at providing five, i.e., three more, which is the minimum set difference and which in this case is equivalent to an increase of 150%; vice versa, it is much more likely that a region that normally gives rise to thirty corners, may provide even thirty-three, insofar as in this case it is only 10% more.

This consideration alone suggests making reference to a percentage increase, rather than an absolute increase, at the same time also directing attention towards methods that can eliminate critical regions in alternative ways: these are detailed problems that will be discussed in more detail hereinafter.

In the context of the evaluation of sensitivity, the interesting aspect is simply that of understanding that the number of corners detected within the critical regions is highly variable, and is the main cause of the occurrence of false positives, since between the two comparison images (or more precisely cells), there is a corner difference that is greater than the minimum set threshold, even in the absence of alterations and therefore of failures.

The same regions of the sidewall can also be a source of false negatives: this happens when a crack is generated precisely at these points, insofar as the variation in the number of corners induced by the presence of the crack can be compensated for, and then masked by the high intrinsic variability linked to the background.

Said compensation may be such that the overall change in the number of corners is less than the minimum set threshold, and the corresponding cell is therefore not flagged as suspicious.

Another type of false negative, which depends upon the position of the crack but not upon the number of corners linked to the background, occurs when the crack does not generate enough corners, i.e., when it provides a lower quantity than the minimum set threshold. This can happen, for example, when it does not yet have a sufficient extent, or when it has a soft outline: the former can give rise to too few intensity gradients between pixels, the second can form intensity gradients that are too weak.

Finally, a third type of false negative occurs when the crack is located within a shadowed and therefore very dark region: this is typically the band between the rim and the bead. This condition can give rise to gradients that are too weak or too few in number, but it is not due to a lack in the recognition strategy, but rather to the difficulty in illuminating said zone: it is therefore necessary to meticulously manage the positioning of the camera and illuminator in order to obtain sufficient visibility even at those portions that are the most hidden.

The crack recognition method must therefore be validated against all of these issues, which is equivalent to having to confirm the accuracy of the quality thresholds and of the difference in the number of corners.

For this purpose, on this occasion the position and orientation of the fake crack are rendered randomly variable. The first validation to be performed was that of the quality parameter, executing the algorithm a thousand times for each value between 0.10 and 0.20. The evaluation was restricted to this range because it represents a neighborhood of the previously identified optimum value with the crack kept stationary; therefore, validating the preceding result did not signify having to move too far away from it.

The results are summarized in Table 2 and graphically represented in Figure 12: it is observed that those values within the range of 0:13 ÷ 0:15 are acceptable; below this range, the search for corners has some instability, such as that for 0.11, which is completely unrelated to the progression defined by the other values; above this range, in addition to instability, accentuation is also observed in the increase in false negatives and the decrease in correct detections.

*Table 2*

| Quality threshold | Number of false negatives | Number of correct detections | Number of cases presenting: | | |
|---|---|---|---|---|---|
| | | | 2 detected regions | 3 detected regions | $\geq 3$ detected regions |
| 0.10 | 38 | 952 | 13 | 0 | 0 |
| 0.11 | 8 | 106 | 32 | 846 | 8 |
| 0.12 | 40 | 954 | 8 | 0 | 0 |

(continued)

| Quality threshold | Number of false negatives | Number of correct detections | Number of cases presenting: | | |
|---|---|---|---|---|---|
| | | | 2 detected regions | 3 detected regions | ≥ 3 detected regions |
| **0.13** | **40** | **958** | **4** | **0** | **0** |
| **0.14** | **44** | **954** | **4** | **0** | **0** |
| **0.15** | **47** | **947** | **8** | **0** | **0** |
| 0.16 | 69 | 924 | 8 | 0 | 0 |
| 0.17 | 76 | 922 | 3 | 0 | 0 |
| 0.18 | 55 | 943 | 4 | 0 | 0 |
| 0.19 | 58 | 941 | 3 | 0 | 0 |
| 0.20 | 80 | 918 | 3 | 0 | 0 |

In a similar way, for the validation of the threshold for the minimum difference in the number of corners, for threshold values between 2 and 6, a thousand tests were performed with a random position and orientation of the fake crack.

Lower values were not considered, because assuming the value 0 would be tantamount to not applying a filter to the acceptance of suspicious regions, whilst 1 is a value that is still objectively too low, wherefrom too many false positives would arise; as regards the upper limit, however, as will be seen, a value of 6 leads to decidedly unsatisfactory results, whereby it would not have made sense to expand the range upwards.

The process thus provides for a validation step for discarding any false detections.

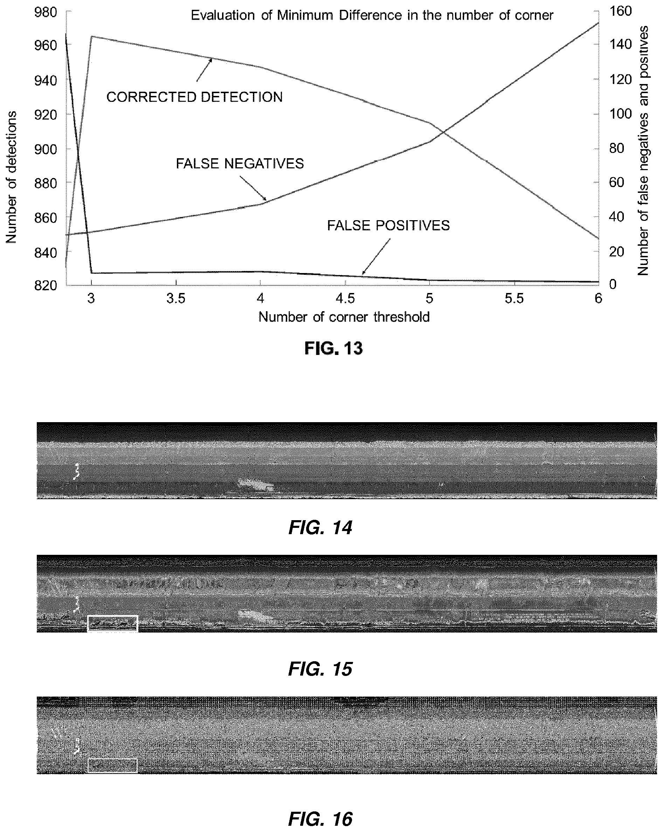

The results are summarized in the following Table 3 and graphically represented in Figure 13: it can be seen that the acceptable threshold values are 3 and 4; below these values there is too high a number of false positives; conversely, above these values, there is a marked increase in the number of false negatives.

Ultimately, as regards the use of the fake crack, the previously determined thresholds are also validated with respect to the variability of the position and angle of the sipe, and therefore regardless of the background upon which it is located.

Therefore, in order to minimize incorrect and missed identifications, the values of 0.15 per the quality parameter, and 3 for the minimum corner increase in a square cell with sides equal to one hundred pixels, remain confirmed.

Theoretically, the only region that should be detected is that wherein the fake crack is located, thus a greater number of regions manifest false positives. Furthermore, the sum of all cases should be equal to the number of tests, i.e., one thousand; on a few occasions however, the system can simultaneously return a false positive and a false negative whereby the sum can be greater than a thousand; this therefore signifies that a single data value is contributing to two categories.

After processing the images by applying what has been described thus far, according to the present invention it is also possible to characterize each pixel $p_{la}(x_i, y_j)$, belonging to each overall image la, by means of at least two pieces of information:

- the magnitude of the displacement vector of each pixel $p_{la}(x_i, y_j)$, belonging to la, with respect to the counterpart pixels $p_{lr}(x_m, y_n)$, belonging to the reference image Ir, having the same characteristics in terms of, but not limited to:

    • gray scale value;
    • gradient of the gray scale value calculated according to two perpendicular directions, namely the x and y directions;

- the angular direction of the displacement of the vector indicated above, with respect to a preferred direction, for example the x direction.

When all of the pixels $p_{la}(x_i, y_j)$ belonging to la are characterized as described above, a displacement vector field is obtained, wherein all of the pixels $p_{la}(x_i, y_j)$ belonging to la are associated with information in relation to the displacement (in magnitude and direction) thereof with respect to the counterpart pixel $p_{lr}(x_m, y_n)$ thereof, belonging to Ir, which has the same characteristics in terms of, but not limited to:

- gray scale value;
- gradient of the gray scale value calculated according to two perpendicular directions, namely the x and y directions.

For clarity, an example is provided of the aforementioned processing.

With reference to Figure 14, a reference image Ir is shown, i.e., an image with no defects of a sidewall of a pneumatic tyre.

The subsequent Figure 15 shows an overall image Ia, i.e., an actual image of the same sidewall of the same pneumatic tyre taken at a different interval of time, under the effect of external and/or static/dynamic environmental inputs that differ from that of the force of gravity and/or that of atmospheric pressure acting upon the surfaces of the same pneumatic tyre; which is then found to be in a deformed condition. The pneumatic tyre shows a defect in the lower left corner of the sidewall.

The subsequent Figure 16 shows, highlighted by a white frame, the field of the displacement vector calculated on each pixel $p_{Ia}(x_i, y_j)$ belonging to Ia, compared to the counterpart pixel $p_{Ir}(x_m, y_n)$ belonging to Ir and having the same characteristic as $p_{Ia}(x_i, y_j)$ as described above. The regions highlighted by a white frame are then associated with the displacement data (in magnitude and direction) of the respective pixel $p_{Ia}(x_i, y_j)$, compared with the counterpart pixels $p_{Ir}(x_m, y_n)$ thereof, belonging to Ir and having the same characteristics as $p_{Ia}(x_i, y_j)$ as described above.

It can be observed that, both by:

- setting the field of the displacement vector calculated for Ia to zero;
- superimposing said field of the displacement vector on Ir;

the differences in the deformed condition wherein the object of interest is to be found are canceled.

In other words, it is possible to set the same deformed conditions as those of the object of interest represented in a 2D digital image taken at different intervals of time, by:

- calculating the field of the displacement vector of Ia with respect to Ir;
- setting the calculated field of the displacement vector to the same value for Ir and/or Ia;

even if the object of interest shows a flexible/hysteretic mechanical/structural behavior and is under the effect of external and/or static/dynamic environmental inputs that cause random and unpredictable deformed conditions overtime.

In other words, it is possible to improve the spatial correspondence between Ir and Ia in performing the aforementioned manipulation on the field of the displacement vector of Ir and/or Ia as described above.

It may also be noted that when the methodologies referred to above are performed before a conventional background subtraction methodology, or prior to a comparison perfected as described within the present description, the spatial correspondence between Ir and Ia is improved and this circumstance, in turn, reduces the false defect detection rate.

It may also be noted that the best results are obtained if the aforesaid method, as described above, is iterated a few times, namely:

- the field of the displacement vector is calculated several times as a result of the comparison, between Ir and Ia(ti), $Ia(t_2)$, ..., $Ia(t_n)$, where $t_1$, $t_2$, ..., tn are consecutive instants in time;
- for every iteration, the field of the displacement vector calculated above is set to the same value for Ir and/or Ia;
- for every iteration, a background subtraction is performed or, according to the invention, a step of improved comparison between Ir and Ia(ti), $Ia(t_2)$, ..., $Ia(t_n)$, where $t_1$, $t_2$, ..., tn are consecutive instants in time, after setting the field of the displacement vector calculated above to the same value for Ir and/or Ia(ti), $Ia(t_2)$, ..., $Ia(t_n)$;
- the area proposed as a potential defect in the step described above, is subjected to topological intersection, i.e., it is verified whether the area proposed as a potential defect calculated at the instant $t_n$, contains or is greater than the area proposed as a potential defect calculated at the instant $t_{n-1}$.

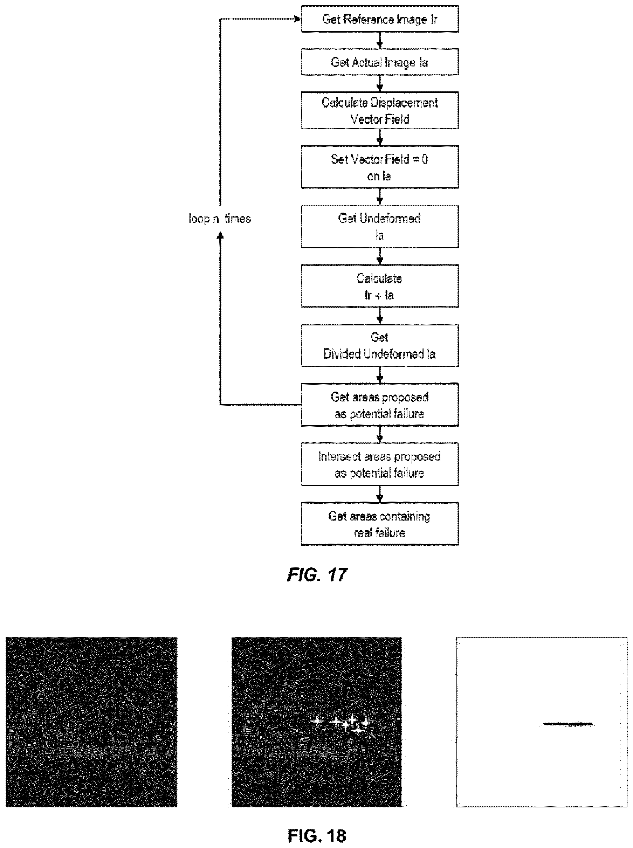

For clarity, a flowchart is shown in Figure 17 of the methodology as described above.

Conclusion regarding the software development phase

The series of tests carried out with the use of the false sipe demonstrated the feasibility of the method. By employing the parameters approved in Section 3.4.4, the method achieves a success rate close to 95% in the recognition of the fake crack, which is found in nearly all positions with the exception of some in the vicinity of the rim.

The fake crack generates at least four corners in each position tested, an amount that allows for good selection between correct and incorrect detections; furthermore, at most a false positive is returned. All this shows that the method is potentially suitable for the purpose and has a low percentage of missed or incorrect detections: the trial version of the program, as described thus far, was then approved, thus becoming the first version to be effectively used with entire databases of images from the monitoring of actual tests, as soon as the vision system was configured.

This means that the method then passed from the situation of comparing itself with the search for fake cracks to that of operating under actual operating conditions: the main differences are that of having a slightly different background from time to time, even though it is rendered as repeatable as possible by means of the pre-processing of the images, and above all having to detect real cracks formed during the course of actual tests.

The first tests in this context showed a certain increase in false positives due to the widening of the panorama of situations that can give rise to an increase in the number of corners of a cell that is higher than the predetermined threshold.

The first to manifest itself, as immediately evident, by virtue of the progressive improvement of the vision system, is that the images acquired by the real tests are significantly brighter than those used as the background for the false crack: this aspect reduced the corners detected within critical areas with embossed geometries and the variability thereof; on the more recent images however, this effect is more significant.

It is useful to highlight that this is not the difference in brightness discernible during a test, which the algorithm can correct, but that of two different tests wherein the images thereof are captured with different lighting conditions.

Shown below in Table 3 are the results for different thresholds for the minimum difference in the number of corners applied to a thousand executions of the algorithm.

*Table 3*

| Minimum difference in the number of corners | Number of false negatives | Number of correct detections | Number of cases presenting: | | |
|---|---|---|---|---|---|
| | | | 2 detected regions | 3 detected regions | $\geq 3$ detected regions |
| 2 | 21 | 92 | 902 | 8 | 0 |
| **3** | **31** | **965** | **7** | **0** | **0** |
| **4** | **47** | **947** | **8** | **0** | **0** |
| 5 | 84 | 915 | 3 | 0 | 0 |
| 6 | 153 | 847 | 2 | 0 | 0 |

Theoretically, the only region that should be detected is that wherein the fake crack is located, thus a greater number of regions manifest false positives. Furthermore, the sum of all cases should be equal to the number of tests, i.e., one thousand; on a few occasions however, the system can simultaneously return a false positive and a false negative whereby the sum can be greater than a thousand, this therefore signifies that a single data value is contributing to two categories.

In any case, the first trials demonstrated nonetheless appropriate operation of the algorithm, confirming that although presenting lower repeatability and accuracy it is still able to recognize sipes. This is due to the fact that a real crack has characteristics that are significantly different from the fake crack that was used.

Actual cracks, of an equal length, typically generate a lower number of corners than a fake crack, because the latter has a thinner and more pointed shape, but above all it has a perimeter with much sharper corners; actual sipes have instead edges that are softer and more gradual in terms of variation in intensity. As a result, too high a threshold for the corner difference can more easily lead to a false negative, whereby the study of the behavior that can be obtained with a lower threshold and equal to two was initiated, which, however, renders the method less selective in the face of false positives.

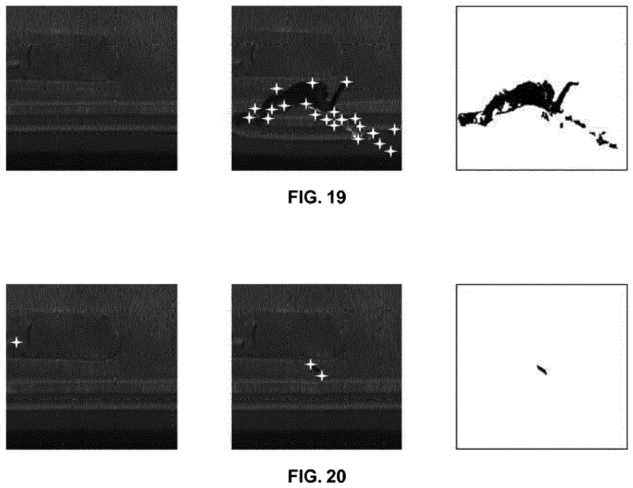

The Figures from 18 to 20 visually show the various considerations just mentioned: comparing Figure 18 with the other two, it can be observed that the image which is the background to the fake crack is decidedly darker; furthermore, Figures 19 and 20 demonstrate the ability of the program to also detect real cracks, and that the use of a lower threshold, in some cases, makes it possible to detect even very short sipes, and therefore at a moment in time that is very close to the formation thereof.

Table 4 shows the information concerning the crack that the program makes it possible to be known, and in particular lists that information relating to the fracture shown in Figure 20, which constitutes one of the best results identified using the first version of the program, further confirming the potential of the method.

*Table 4*

|  | Pixels | Millimeters |
|---|---|---|
| Image/sidewall dimensions | 13743 x 1092 | 1993 x 126.8 |
| Crack Major/Minor Axis Length | 21.9/4.5 | 3.2/0.65 |
| Crack Orientation angle | -23.9° | |
| Area | 72 | 1.63 mm$^2$ |
| x/y coordinate of Crack center | 4560 / 998 | 661.2 / 115.8 |

This series of new problems encountered in dealing with real fractures in the material clearly led to a review of the program, albeit already routinely anticipated for the natural improvement of the method, in order to implement new solutions and adapt it within the context of the actual operating environment.

Second possible software version

The first version of the program highlighted a number of progress points upon which to intervene in order to adapt and improve the performance of the method in terms of the recognition of actual cracks. The changes to these points, alongside the introduction of new image processing procedures for improving the execution time or to fine-tune the results, led to the creation of a second version of the program.

In particular, a number of alternative methods were devised for carrying out the individual operations, which are presented below.

A modular structure was attributed to the software as a whole, which makes it possible to select the method to be used to perform each of the individual operations, which then become interchangeable.

Given that performing the same operation using different methods can however lead to different results and possibly to a certain variability: for example, using different strategies for the correction of brightness definitely involves variable values of intensity of the individual pixels from one to another, albeit in a way that is imperceptible to observation.

The modular structure and the interchangeability of the operations therefore lead to the possibility of experimenting with different combinations of procedures and to identifying the most effective in general, and also to being able to resort to a different combination for special cases with specific difficulties.

Second possible rotation method

The rotation applied by means of the count of the number of corners present over the entire image demonstrated high reliability, but on the other hand it involves a high computational load. In order to reduce it, a method based upon the cumulative average was introduced: the latter is calculated from the average of the central row of the image, iteratively updating the value thereof row by row proceeding both upwards and downwards, which is therefore calculated progressively using two lines, then three, four and so forth up to the extremes of the image.

This particular procedure has been adopted because it was observed that, by representing both the progression of the cumulative average and of the arithmetic average calculated row by row, and filtering them suitably in order to reduce the noise, it is always possible to locate a remarkable point in the vicinity of the edge of the rim. This can therefore be interpreted as a characteristic point in order to understand at which part of the image the rim is located and thus to suitably rotate the image.

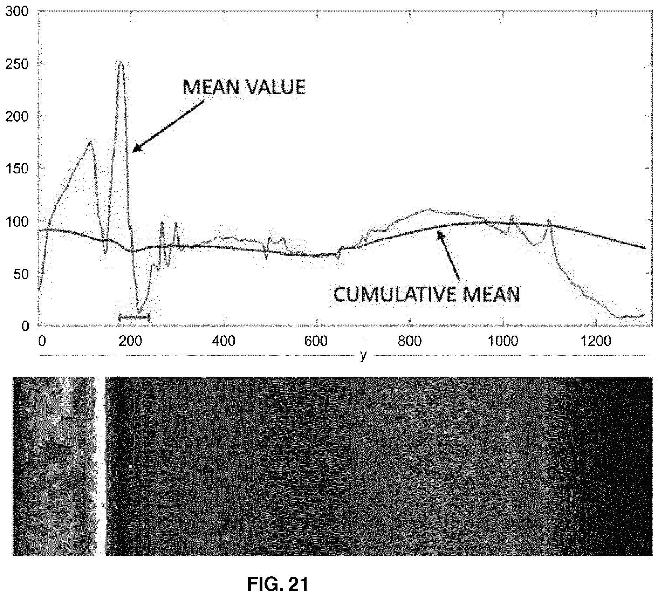

If, however, the cumulative average were to be calculated by proceeding from one extreme to the other, this point would not be revealed. In more detail, Figure 21 shows that the edge of the rim gives rise to the most pronounced minimum points of both progressions, and to the most abrupt gradient of intensity with regard to the per row arithmetic mean.

All of the minimum points of the progression of the cumulative average are identified first, and the one of interest is selected by searching for which of them is associated with the maximum difference of the arithmetic mean and assessing the gap that occurs in a certain neighborhood of each minimum point.

Once the correct minimum point is found, it identifies the approximate coordinate of the edge of the circle: from such a coordinate, it is possible to move over the graph of the arithmetic mean, until the first minimum point is found, which is assumed to be the exact location of the rim.

With the latter known, it is possible to proceed with the rotation and cropping of the images in the same manner as that described above, and therefore continue to apply the relevant considerations. This method also demonstrated good cropping precision and high reliability, and the use thereof reduces the execution time of the rotation operation from 10.3 to 0.6 seconds, but this also depends upon the computer used, whereby it is more correct to speak of a reduction in the order of 90%.

Second possible alignment method

As already previously explained, the first method for the alignment of the images makes it possible to obtain very high but not complete reliability: as a result, alternative methods were searched for in order to further improve the result; the alignment operation is in fact crucially important for the purposes of the subsequent analysis, insofar as, when the subtraction is performed between the two compared images in order to evaluate the differences in intensity, then if they are not correctly aligned the result will be a large number of false positives.

Due to the effect of those variations that can occur on the sidewall during a test, the failures of the method are in practice encountered only with images that are subsequent to the first: it was therefore decided to maintain the first method for processing the reference image and to identify a new strategy for those acquired thereafter.

The second method devised is based upon the consideration that any circumferential row of pixels of the image in fact constitutes the discretization of the light signal recorded by the corresponding pixels of the sensor, this means that it can be treated as a discrete time signal.

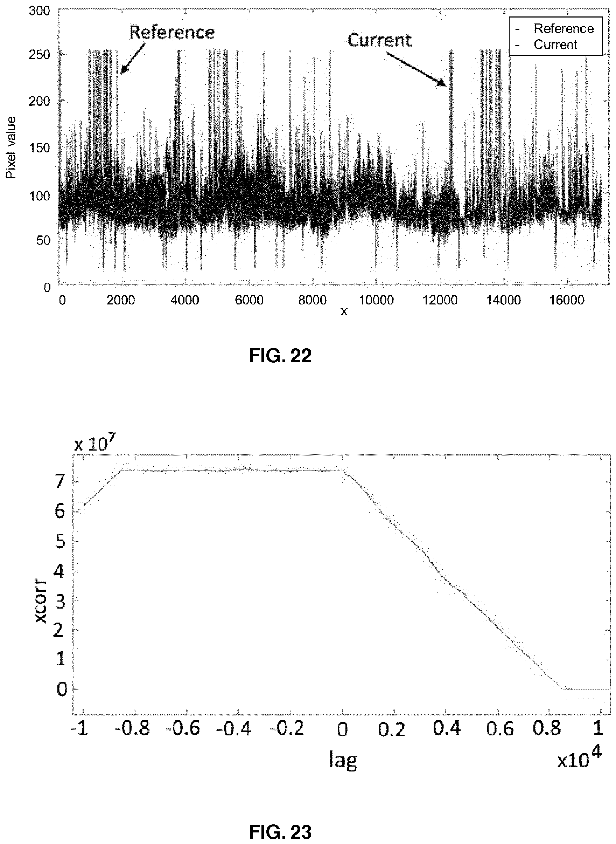

Insofar as within each image two rotations of the wheel are captured, this signal has a cyclical pattern that is repeated twice. The problem can then be interpreted as a problem of alignment of two signals (Figure 22): once a single revolution of the wheel has been extrapolated, it is possible to extract the signal of a given row of pixels (for example the middle row), and search for the best alignment with the signal of the same row originating from the current image, progressively shifting one image relative to the other.

In Figure 22, the black line represents the reference signal and is shorter because it has already been reduced to a single revolution of the wheel, while the blue line represents the signal of the current image, which comprises two revolutions of the wheel. It may be noted that the blue progression is effectively repeated twice, and that the black progression, if shifted by a certain amount, can overlap the other almost perfectly.

In order to find such an alignment, it is possible to resort to cross-correlation, which in signal theory expresses a measure of the similarity between two signals, as a function of the temporal displacement therebetween. For a pair of continuous or discrete signals x and y, respectively, the cross-correlation is calculated by means of Equations 11, where $x^*$ is the complex conjugate of x:

$$R_{xy}(t) = \int_{-\infty}^{\infty} x^*(\tau)y(t+\tau)d\tau$$

(3.11)

$$R_{xy}[n] = \sum_{m=-\infty}^{\infty} x^*[m]y[n+m]$$

The displacement value resulting in the maximum cross-correlation value is what is necessary in order to translate one signal in relation to the other in order to achieve alignment (Figure 23).

It is subsequently sufficient to extract the signal of the current image in correspondence with the extremes of the reference image in order also to extrapolate therefrom a single rotation of the wheel with the same start and end points of the image.

This second method only processes the individual rows of pixels, rather than the whole array which constitutes the image, and so it is faster than the first; by contrast, however, it fails more frequently, whereby the use thereof has been suspended, pending improvements or different usages, for example in combination with other methods, or as an alternative solution in the case of incorrect alignment on the part of the latter.

Third possible alignment method

The first two methods obtain alignment regardless of the elements present on the sidewall of the pneumatic tyre: it is very frequent however for this to be marked with white markers for internal traceability; in addition, practical experience in acquiring and processing images has shown the usefulness of affixing an indication of the direction of rotation, an operation now established as routine.

All of this signifies that both sides of the pneumatic tyre always exhibit distinctive signs; it may therefore be convenient to attempt to also exploit this feature for the purposes of alignment.

The third method aims to detect the same marker repeated twice on the image (because the latter contains two revolutions of the wheel), i.e., a pair of identical marks, and to use them as the initial and final point of the image.

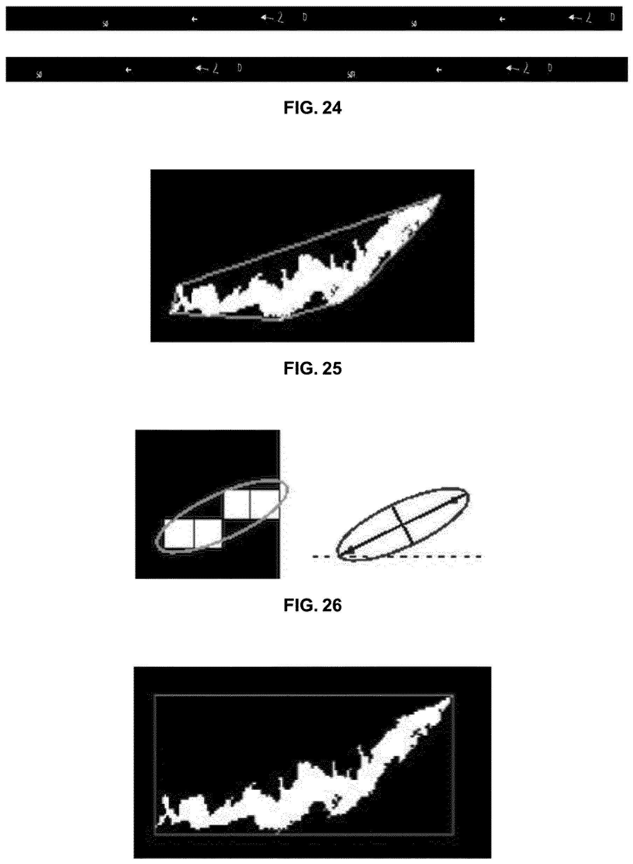

In Figure 23 it is possible to observe the peak which represents the best alignment. The obliquely descending sections are due to the different lengths of the two signals, and identify those displacements for which they are not completely overlapping, whilst in Figure 24 it is possible to observe a sequence of five corners that is repeated twice; from one image to another, this sequence is shifted by a certain amount.

With regard to the processing of the reference image, the largest markers present are isolated first by means of conversion to a black and white image: in particular, the ten markings with a large area are taken into account, which ideally constitute five pairs (Figure 24); this is not always the case; if there are several markers with similar areas it may occur that one of the two "twins" is excluded from the selection, and therefore one less couple is thereby available.

At this point, each of the ten areas identified is attributed five geometric characteristics and a location, which, from a theoretical point of view, do not vary from one image to another.

The first geometric index is the solidity, which is calculated as the ratio between the area (in pixels) of the identified region and the area of the convex polygon thereof (Figure 25).

The second is the roundness, which expresses a measure of the extent to which the region approximates to a circle, and is calculated according to the formula given in Equation 3.12 where A and p are respectively the area and perimeter of the region being considered:

$$\frac{4\pi A}{p^2} \tag{3.12}$$

To each region resulting from the image, it is also possible to associate an equivalent ellipse, from which it is possible to calculate the ratio between the length of the minor axis and that of the major axis (or vice versa), and the eccentricity, which is the ratio between the distance between the foci and the length of the major axis (Figure 26).

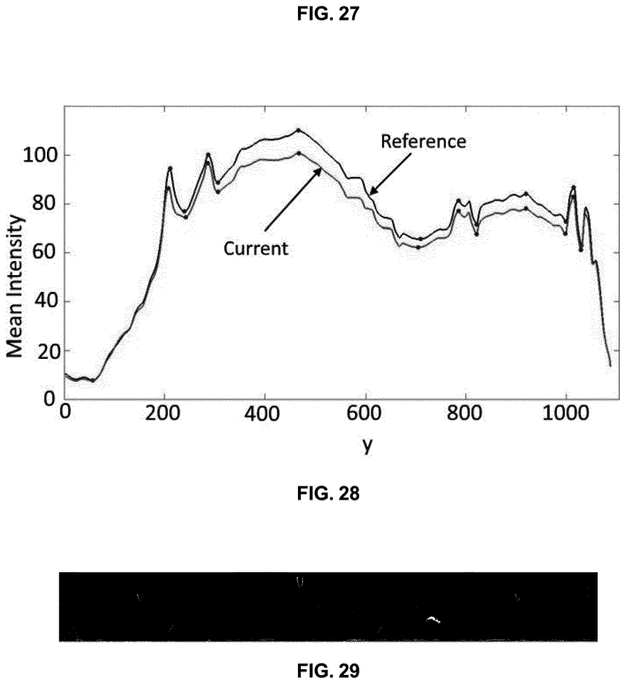

Finally, each region can be characterized by means of the extension thereof, given by the ratio between the area of the region and the area of the minimum rectangle wherein it can be contained, said bounding box (Figure 27).

The validation step can then include a comparison step between:

- a superficial extension value expressed in pixels$^2$ of each area identified as a potential defect; and
- a predetermined surface threshold value expressed in pixels$^2$,

discarding the areas identified as a potential defect, wherein said superficial extension value is lower than said surface threshold value.

As regards instead the characteristic relating to the position of the region, due to the repeatability of the cropping of the images it can be stated that the relationship between the vertical coordinate of the centroid of the region and the height of the image will always have the same value, except for some slight movements of a few pixels: as a result, it is regarded as a sixth invariant characteristic of each region.

Since all of the six properties are expressed with ratios that can assume values between zero and one, it is possible to consider the six values calculated as though they were the coordinates of a vector in six-dimensional space. This makes it possible to calculate the scalar product between two vectors within such a space:

$$x \cdot y = x_1 y_1 + x_2 y_2 + \ldots + x_n y_n \tag{3.13}$$

the norm of a vector:

$$\|x\| = \sqrt{x_1^2 + x_2^2 + \ldots + x_n^2} = \sqrt{x_1 y_1 + x_2 y_2 + \ldots + x_n y_n} = \sqrt{x \cdot x} \tag{3.14}$$

and the angle between two vectors, resulting from the definition of the scalar product:

$$x \cdot y = \|x\|\|y\|\cos\theta \Rightarrow \theta = \cos^{-1}\left(\frac{x \cdot x}{\|x\|\|y\|}\right) \tag{3.15}$$

In order to find those markers that constitute a pair, it is possible to calculate the angles between the respective vectors of all possible pairings: the result is a matrix with a number of rows and columns equal to the number of selected markers, and the minimum value therein identifies the two most similar regions therebetween. This means that the corresponding mark is the one that is most similar to itself, and is therefore suspected of having better repeatability than the other: for this reason, it is promoted to the reference marker, and the vector associated with it is stored to be recalled during the processing of those images subsequent to the first image.

In particular, this vector is used to repeat the search for the two regions that together therewith form the smallest angles: with the pair of markers being known, it is possible to proceed with cropping the image at those vertical lines that identify an extreme thereof or else the centroid, extracting in this way a single revolution of the wheel from the image in always having the same beginning and end point.

This method involves an increase in execution time, which more precisely doubles from 0.3 to 0.6 seconds, this is in any case an increase of less than one second, and therefore acceptable. The first tests furthermore demonstrated that the method exhibits reliability that is comparable to that of the first method described above.

Second possible method for correcting the brightness

The first method for correcting the brightness leads to good results in terms of the average intensity of the image. By contrast, the iterative process implies a long execution time, and furthermore local variations may remain, which in this case means along the radial direction; as explained in fact, different corrections are made to pixels of different intensities in an attempt to satisfy the condition of average brightness, and this means that for some tones the variation in brightness can be compensated for in an appropriate manner, and for others less so.

In order to obviate these drawbacks, a second strategy has been designed specifically with different behavior, and it is important to emphasize that said strategy cannot operate independently but requires a preliminary phase wherein, in a radial direction, horizontal bands of the image are lengthened or shortened.

As seen for the first method, the first test image remains unchanged, and is exploited as a reference in order to process the subsequent images, rendering them as similar as possible thereto. A suitably filtered graph is obtained first of the average image intensities calculated along the horizontal lines (Figure 28), both for the reference and the current image; upon them are then identified the respective maximum and minimum points that have a prominence greater than a certain threshold in order to select the most significant peaks among all of those present; in fact, it is reasonable to assume that these peaks are the most repeatable within the various images, insofar as, due to the prominence thereof, they have a higher probability of corresponding to rows that are more fully characterized than the other rows.

In Figure 28 the blue markers identify the maximum and minimum points considered: whereby it is possible to observe that they are not exactly aligned from one image to another.

As a result of deformations to the sidewall of the pneumatic tyre that can intervene within a test, these significant points tend to become misaligned and to result, on the current image, slightly shifted in comparison to the counterparts thereof found on the reference image. Given the characteristics thereof, they are then interpreted as delimiters, and exploited in order to lengthen or shorten, along the vertical direction, those parts of the image included therebetween: in other words, within each sample image, each of these "nodes" is reported at the same vertical coordinate at which the counterpart thereof is located on the reference image.

At this point, in principle, between the two compared images there is perfect alignment in the radial direction, and it is possible to intervene on the brightness, simply by increasing the intensity value of a row by an amount equal to the difference in the mean intensity of said row between the two images, signifying that the two lines shown in Figure 28 become exactly coincident and superimposed one over the other.

In this way, for both of the images, both the average intensity of each row and the average intensity of the entire image are rendered equal. This method reduces the execution time from 5 to 0.2 second, and makes it possible to obtain better visual rendering compared to the first method; it does however also have weak points in that it introduces greater artificiality into the values of the pixels, and also suffers from slight shortcomings in the precision of the vertical alignment, albeit in a non-invasive way with regard to the integrity of the image.

This incomplete accuracy can occur, for example, when two nodes are found to be too close together and interfere with one another, or when the nodes identify a line that is not characterized by peculiarities, as required, but is simply more luminous due to particularly intense reflections owing to the inclination of the surface of the sidewall at that point; if the sidewall is deformed, the reflection moves to another point on the surface that is independent and therefore different from the point to which the points of the surface itself move, whereby, the correspondence between the vertical coordinate on the image and the radial coordinate on the sidewall is lost.

Second possible image analysis method

The revision of the method for the recognition of the sipes has been oriented, other than in pursuing in general better efficiency within the processes and in introducing a modular structure, towards a reduction in the number of false positives and negatives. In regard to the latter, it should be stressed that the main difficulty lies in the fact that an intervention aimed at making the selection regarding false positives more stringent, almost inevitably, renders the program more rigid, also regarding those regions that effectively have cracks, and therefore tends to increase the false negatives: in other words, these are conflicting requirements, and improving in one way almost certainly corresponds to worsening in the other.

For this reason, the software proceeds by using a gradual logical process, utilizing from time to time the various parameters to which reference can be made in order to locate a crack: the intensity of the pixels, the geometric shape, and intensity gradients, i.e., the edges and corners. Insofar as the development thereof began at a time when a number of image databases had already been acquired, the new version has the important innovation of taking advantage of back data for improving the performance of the program, contrary to that which took place previously.

The first intervention, compared to the initial version, was to improve the approach with which those regions are investigated that are characterized by a difference in pixel intensity between the reference and current images. The images are converted to binary format by means of a threshold returned by a specific function that is constructed upon the basis of data obtained from previous tests. In particular, for each available test, the threshold value is observed that renders the crack distinguishable in the best way with respect to the background, and is associated with the value of the average intensity of the image: the function to be used within the process is obtained by interpolating such data.

Upon conversion, for each row of the image the average intensity is calculated and, as a function of this, the corresponding threshold value: the transformation then exploits a different and specially calibrated threshold for each individual row according to the brightness that it presents; this is equivalent to saying that the threshold is locally adapted to the tone of the specific region, because for a darker background a lower threshold is required in order to highlight a crack, and vice versa.

The conversion is such that is sets the dark tones to the value 0, and the light tones to the value 1, which are respectively equivalent to black and white: this means that the converted image will appear visually as a white background with scattered black regions. Since the functions subsequently used require an input that is such that they search for white regions, the binary images are inverted.

At this point, a matrix is generated that represents a map of those points that are characterized by a considerable difference in brightness: this is calculated by assigning the value 1 to those pixels that are white on the current image and black on the reference image (more precisely, on the respective conversions in binary format), and the value 0 to all of the others; this is equivalent to searching for those points that are light in tone on the first test image, and instead dark in tone on the sample acquired subsequently, this being a variation that could potentially have been induced by the formation of a sipe.

An example of a matrix resulting from this process is shown in Figure 29: albeit with great difficulty due to the significant contraction of the image, it is possible to distinguish a large quantity of small white regions, and this notwithstanding the fact that the conversion method was, from the first selection, designed to reduce to a minimum the number thereof; the map can also present more or less decisive noise in the form of scattered white pixels. For these reasons, after obtaining the map of the differences in intensity, it is necessary to implement a further selection of the resulting regions based upon the form thereof, exploiting the already described geometrical parameters: solidity, roundness, eccentricity, the ratio between the axes and the extension.

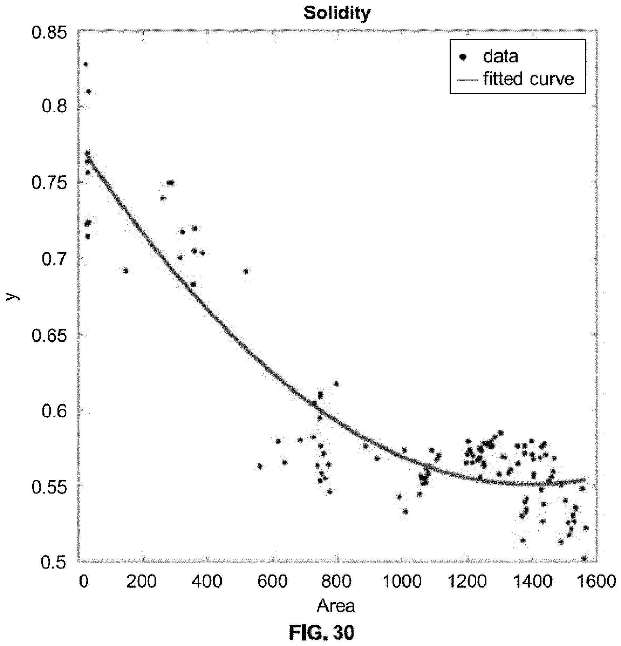

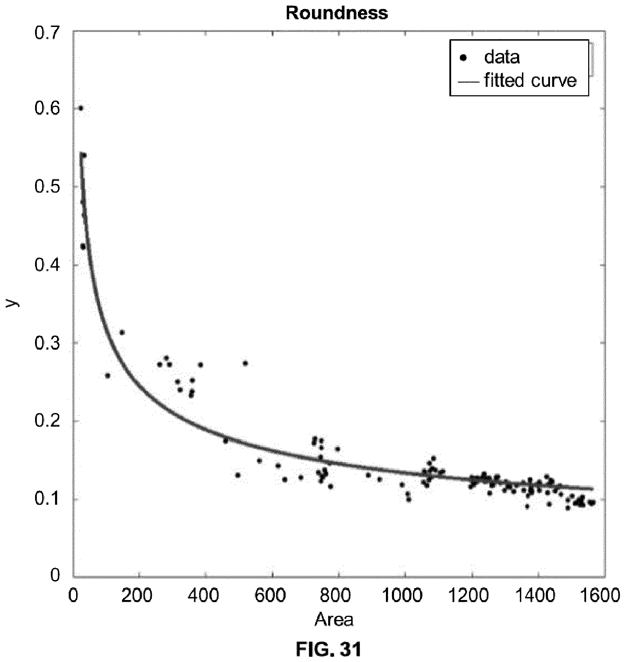

We will focus in particular on the first two, insofar as the study of the existing databases showed that they are those characterized by more clearly defined and repeatable progressions. Considering a single database of images relating to a test, for each of them the value of the geometrical parameters of the crack was located in relation to the area thereof, resulting in the graphs in Figures 30 and 31, which relate respectively to the solidity and the roundness: it can be observed that, other than possible and sporadic outliers that are removed, the various pairs of data are arranged along a well-defined progression from which a sufficiently reliable interpolation can be obtained.

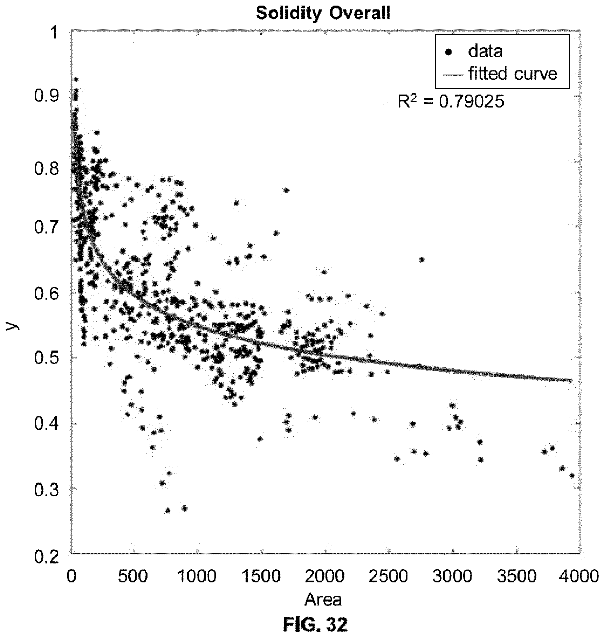

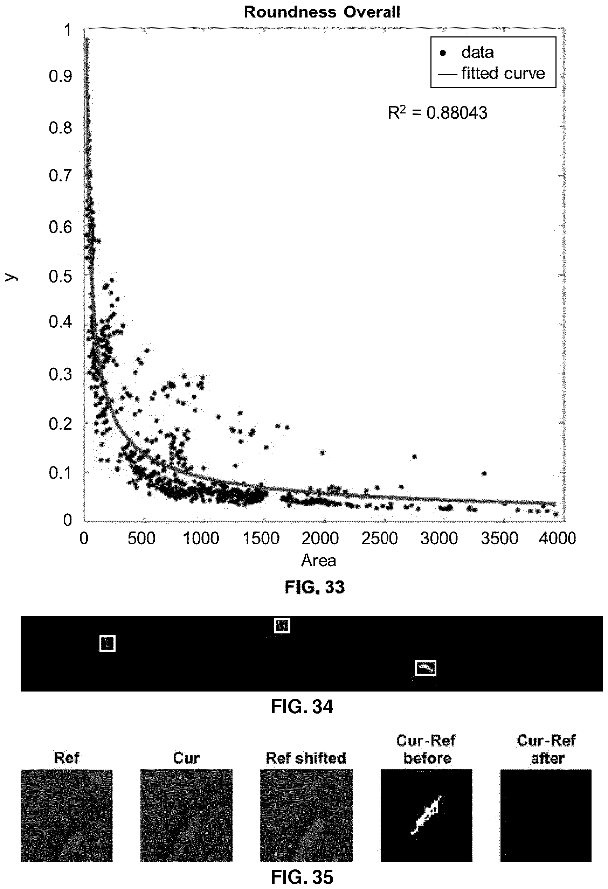

Repeating this type of study for each image of every available database, and collecting all of the data into a single prospect, the graphs in Figures 32 and 33 are obtained, from which it is observed that with the spreading of the crack, and therefore the growth of the area thereof, the geometric parameters assume repeatable values, even though they are calculated from different cracks.

Solidity and roundness are the parameters that best meet this characteristic, because they present the highest coefficients of determination $R^2$, i.e., they give rise to interpolating functions that best approximate the back data: as a consequence, they can be considered to be references that are reliable enough to characterize and recognize a crack, and were, therefore, chosen to select regions of the image according to the shape thereof. In particular, the roundness parameter was approached first because the respective data are less scattered and as a whole, throughout the range of the abscissa, it has a higher coefficient of determination: however, it should be noted that for smaller sipes the solidity demonstrates better behavior in terms of the acceptance of a crack, i.e., it generates a significantly smaller number of false negatives, whilst they have equivalent performance with regard to the reduction of false positives; with regard to larger sipes the situation is reversed and becomes slightly in favor of the roundness.

To make the selection, firstly a simple elimination is performed of those regions having an area that is below a certain threshold, either because they are too small to be recognized with certainty as cracks, or because in this way it is almost completely the noise resulting from the previous operation. The interpolating function calculated on the basis of all available data (in this case the graph in Figure 33) is then utilized: with respect to this function, for every value of area on the abscissa a tolerance range is established for the geometric parameter, both upwards and downwards; the amplitude of the range can be set arbitrarily in the form of a multiple of the standard deviation of the data upon which the function is calculated.

If a region, characterized by a certain area, has a value of roundness outside such a tolerance range, it is rejected, because it does not follow the expected progression and therefore is assumed that it has a low probability of revealing a crack and that it is, instead, a potential false positive; vice versa, if the parameter falls within the range, the region is maintained and subjected to the subsequent analysis strategies.

This geometric selection step reduces the number of regions within which to investigate further (Figure 34): both for roundness and solidity, this reduction is of the order of 80%, which then results in 40% fewer false positives at the end of the entire detection step.

In Figure 34 it can be seen how the white regions are now decidedly less numerous and the noise is no longer present. Also displayed are the bounding boxes corresponding to the remaining regions: only the bottom one on the right represents a crack.

Only following this operation are the cells discussed earlier re-defined. Unlike the first version of the software, instead of dividing the image according to a grid with a square mesh and evaluating the variation in the number of corners within each of them, on this occasion bounding boxes are defined around the remaining regions, delimiting those cells wherein the center is coincident with the centroid of the region, which are therefore no longer ordered but scattered over the image: within these cells the following comparison will then be performed in the same way in terms of the number of corners.

Before proceeding with the corner search, however, an additional constraint is introduced for the regions with the purpose of eliminating another source of false positives, namely the misalignment of the same object from one image to another. In fact, very frequently the geometric selection is also overwhelmed by regions that are not actually the seat of variations of the surface of the sidewall. Such zones, theoretically, should not give rise to any regions on the map of the differences in intensity, and instead this can nonetheless occur due to slight fluctuations in the speed of rotation of the pneumatic tyre, moving parts present on the sidewall, or else the pre-processing imperfections, whereby one and the same element appears in a slightly translated position within the two comparison images.

It therefore becomes necessary to search for the alignment of those elements corresponding to the remaining regions, and to do so requires the use of two different methods, in such a way that one is able to compensate for any cases wherein the other does not reach the objective.

The first takes the cell of interest from the reference image, and the counterpart thereof from the current image, and performs thereupon the two-dimensional cross-correlation: this signifies that one of the two is considered to be mobile, and, hypothetically, made to slide over the other both in a vertical and a horizontal direction, experimenting with all possible overlaps between the two, starting from the configuration wherein the pixel in the lower right corner of one overlaps the pixel in the upper left corner of the other, concluding with the opposite configuration. This is the same concept as that described for the alignment of the image in Section 3.5.2, but performed in 2D and searching for translations in both directions along the plane of the image.

The second method instead identifies within the two cells the five (if available) Harris corners characterized by the highest values of the quality parameter, and uses them to perform the matching, i.e., it combines each corner of a cell with the counterpart thereof within the other cell. The pair of corners which provides the best match is taken into consideration in order to align the cells, making sure that the positions of the corners, within the overall image reference system, become coincident.

After performing the alignment of the cells, the regions therewithin are again recalculated, repeating at a local level all of the previous steps, therefore conversions to black and white on the basis of differences in intensity and geometric selection. Finally, all regions are rejected for which there is a reduction in area of more than 40%, insofar as this signifies that in both cells there is an element that by virtue of the alignment operation has been made to significantly overlap itself. In other words, it means that the element found within the current image was already present within the reference image, whereby the signaling thereof only constituted a false positive. Conversely, a region that is maintained substantially unchanged may be indicative of an alteration that occurred at that point of the sidewall of the pneumatic tyre, and therefore of the possible formation of a sipe.

Figures 35 to 37 show some examples of false positives removed by the alignment operation.

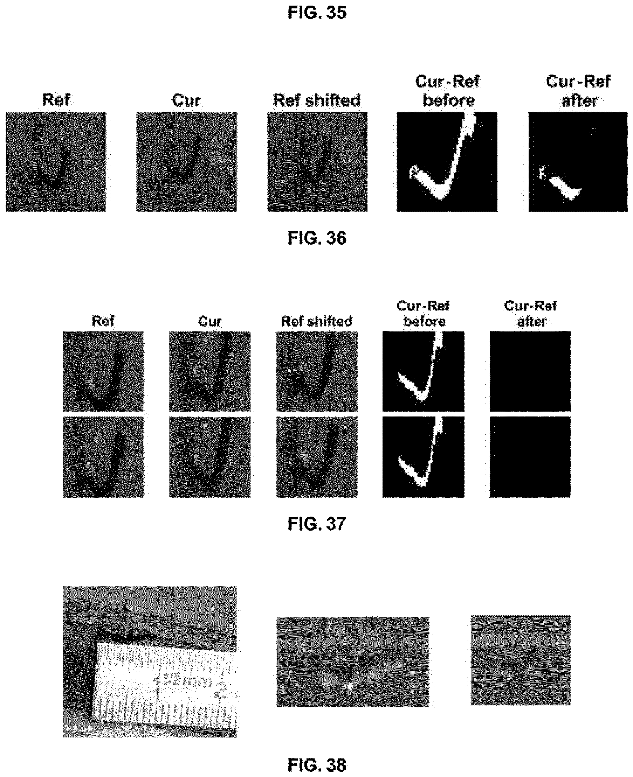

In particular, Figure 35 shows an example of the operation of the method based upon 2D cross-correlation, Figure 36 shows an example of the operation of the method based upon the matching of Harris-corners, while Figure 37 shows a comparison that demonstrates the effects of the two methods in processing the same object.

In the latter, the upper sequence refers to the application of the method based upon 2D cross-correlation, the bottom sequence refers to the application of the method based upon the matching of Harris-corners. It may be noted that the alignment, visible in the two central images, is slightly different between the two, but nevertheless, downstream of the repetition of the previous selections, both obtain the objective of eliminating the false positive (right column).

The repositioning of the cells exhausts the process for the reduction and removal of false positives prior to the comparison in terms of the number of corners included therein, which is therefore performed further downstream than heretofore described, solely on those regions that have passed the selection process.

Compared to the method described earlier, the fundamental principles according to which the comparison is made remain the same: a map is generated of the Harris corners, considering, as a region of interest for the search, one portion at a time of the image; furthermore the characteristic is maintained of counting the corners present within the same cell of both the reference and the current image, and establishing that an increase in corners that is greater than a certain threshold corresponds to the presence of a crack.

Concerning the latter aspect, a major improvement was nonetheless introduced. In the initial version of the software, all corners identified within the borders of the cell were taken into consideration within the count: in this way, however, it can occur that features generated from the background become involved, features that may however vary from one image to another thereby distorting the difference calculation. In the second version, the arrangement is to consider only those corners in correlation with a possible sipe, rejecting all of those that are found to be at distance from the white region that is greater than a certain threshold.

In this manner the calculation is rendered more rigorous and less prone to errors due to factors that are unrelated to the formation of a failure.

Results

Table 5 summarizes the results that the latest version of the software makes it possible to achieve, derived from the application thereof in offline mode to the databases of existing images at the end of the development of the second revision, which have thus played the role of case studies for the evaluation of the program.

More precisely, the latter has been tested on a total of sixty tests, to each of which correspond on average about six hundred images, and the data of Table 5 are the average values calculated on the basis of the total amount thereof.

| Detection Rate % | B/W | GeomSelec | Align | Corners |
|---|---|---|---|---|
| AVERAGE | 100% | 76,44% | 70,26% | 43,52% |

| no. False Positives | B/W | GeomSelec | Align | Corners |
|---|---|---|---|---|
| AVERAGE | 32028 | 177 | 34 | 4 |

*Table 5*

With regard to the detection of the sipes, it can be observed that the geometric selection is the cause of the lack of recognition almost 24% of the time. It should be remembered however that the geometric selection is preceded by the removal of smaller areas, and therefore it can occur within the first images subsequent to the formation thereof that a crack has a smaller area than the predetermined threshold, and can therefore be neglected until it has spread sufficiently.

It is therefore understandable that rendering the threshold parameters for the area less stringent, and in the same way also for the roundness, can lower the error rate, in the face however of a less substantial reduction in false positives.

Regarding the latter, it must be said that the initial number is extremely high because it also includes the individual pixels that form the noise present within the image immediately after the conversion operation to black and white. This quantity becomes much more ordinary by virtue of the geometric selection, even though many residual areas remain: it is to be remembered in fact that the evolution of the capture technique and the passage from pairs of test images to entire databases has resulted in a greater variety of situations to be confronted and, consequently, a certain increase in suspicious regions.

The subsequent local alignment operation gives rise to a further loss of about 7% of cracks, but the greatest contribution to failures comes from the corner count, which reduces the percentage of recognition by approximately a further 27%.

This is at the same time also the least manageable cause, insofar as it is mainly linked to the by now known variability of the pixel values and consequently of the gradients that they form.

Ultimately, with respect to the total of all of the images captured, the program reaches an average crack recognition percentage of 43%, and each image returns on average four false positives. These overall averages highlight clear margins of improvement, however, the analysis of the data obtained from each individual test show that the performance hardly attests to such values, but rather it is either better, or worse.

The program is very efficient in some tests, achieving high recognition rates along with a very low number of false positives, whilst in others the situation is reversed. This is mainly due to how the crack appears on the image (position, brightness and geometric complexity of the background portion, and so on), and to a lesser extent to the diversity of the capture conditions.

Zero recognition was only reported in five tests out of sixty, which is equivalent to saying that in 91.67% of tests, the crack is detected in at least one image.

A small number of case studies were also conducted in online mode, i.e., launching the program in parallel to the acquisition and thereby analyzing the images in real-time during the course of the test on the pneumatic tyre. Amongst these, in two cases the crack was detected at an acceptable stage of propagation and following the occurrence of a fairly small number of false alarms.

One in particular constitutes a highly significant result (Figure 38): this is a sipe that at the end of the test was propagated up to the length of 57 pixels on the image, which in the specific case, in performing true measurements, were equivalent to 9.5 mm.

In particular, this figure on the left shows the effective length at the end of the test; at the center, the region identified by the program within the last image acquired during the test; on the right, the first recognition of the crack by the program.

The program recognized this crack for the first time at the size of 31 pixels, equal to a length of 5.2 mm: from the beginning of the test until the moment of detection it reported only two false positives, and subsequently the crack was detected with good repeatability and continuity. Therefore, regarding this particular test, the behavior of the software was revealed to have been very close to ideal.

The results described so far demonstrate the potential of the crack detection method implemented, also as regards the application thereof to the search for failures under actual operating conditions.

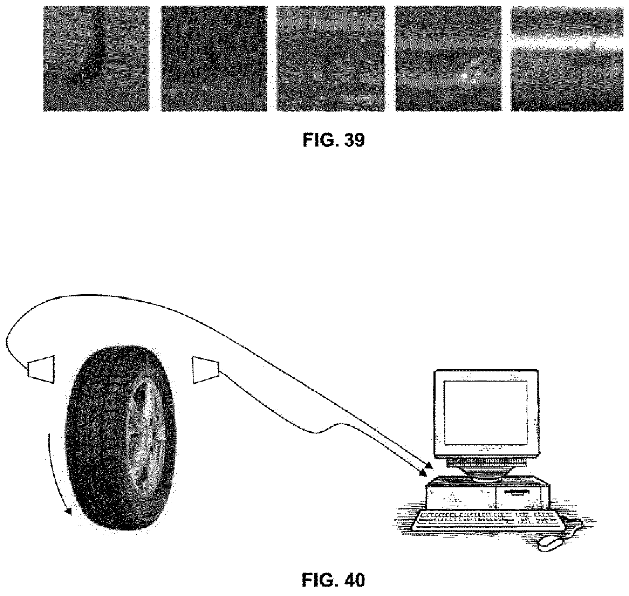

Paradoxically, further confirmation of the validity thereof can also be inferred in contemplating the still discernible false positives (Figure 39). Apart from the case of the formation of a rubber deposit on the sides of the tread which, in not being an area of interest, can simply be avoided by cutting out the lower part of the image, the type of false positive that occurs most frequently in absolute terms is that of the rubber shavings that result on the surface of the sidewall. These are all the effects of the alterations that occur on the pneumatic tyre, and from this point of view it also correct for them to be reported by the software: obviously in order to achieve the final objective it must be possible to distinguish between those variations comprising a material fracture, and those consisting of something else, but the small dimensions of these shavings show that the program is able to detect even minimal alterations on the sidewall.

## Concluding Remarks

It was possible to define a standard both for the hardware components to be adopted in order to ensure that the vision system has adequate performance, and for the capture technique and the acquisition settings, so as to obtain optimal image quality.

The development of a functioning configuration allowed the system to be fully operational, which was then installed on a test machine equipped with two stations, thus launching the actual use thereof for the monitoring of endurance tests.

Usage under actual operating conditions demonstrated the adequacy of the system as an inspection assistance tool: operators can now conduct an inspection in safety and in less time, because they can remotely observe the state of the sidewall of the pneumatic tyre in real time on a display, without having to interrupt the test with long pauses and without having to board the machine for the inspection.

This represents a marked improvement in safety, insofar as to closely inspect a possibly damaged object under pressure is a potentially dangerous operation.

Furthermore, the speed and flexibility with which it is possible to perform the inspection also makes it possible to check the sample being tested much more frequently, and at the same time allows for better planning of the daily activities of the operators. It is also possible to decide, with a wider tolerance, the moment at which to stop the test in order to possibly proceed with further studies or non-destructive tests upon the pneumatic tyre.

Finally, the technical and economic advantages that the system achieves should also be underlined: in fact, the performance of tests without interruptions on the one hand prevents the pneumatic tyre from resting stages, which involve a certain cooling and therefore a certain recovery at a thermal and mechanical level, whereby the test is more rigorous in this regard; on the other hand, they mean that the duration of a test, in terms of time, is shorter; the results are therefore more timely and there is greater availability of the machine.

The vision system was also equipped with specific software for the automatic detection of the formation of a crack. The program is able to detect very small changes in the surface of the sidewall, including newly formed material fractures.

The pre-processing step, with the purpose of applying transformations to the acquired images so as to make them repeatable and thus comparable to one another reaches a very high success rate. The failure detection step has instead demonstrated an ability to recognize cracks even at a very early stage of propagation, but has not yet reached total repeatability.

Future developments in the short term should therefore be oriented towards the improvement of the sipes searching process, pursuing different paths: firstly, a review of the operating parameters that characterize each of the various methods presented can result in an improvement in the success rate; it being understood however that each intervention thereupon shifts the compromise between two conflicting requirements, which are the reduction in false negatives and false positives, it is plausible that a very substantial increase can only be obtained with the introduction of new criteria or methods for the selection of the regions that make it possible to discriminate much more distinctly between an actual crack and a false positive of any other kind.

This could avoid or at least mitigate the constraint of a compromise between these two conflicting aspects, as reducing the recurrence of false positives makes it possible to set parameters that are less strict within those methods already implemented, thereby increasing the number of correct recognitions.

The first intervention to be considered is that regarding the operation that determines the greatest contribution in terms of failures, namely the counting of the Harris-corners: as explained above, during the software development phase these corners have proven to be a suitable tool with the aim of finding cracks within the test images, and as such they also confirmed themselves in the face of a good number of databases obtained from actual tests.

The latter, however, present a variety of situations to be addressed and a variety of aspects to be considered that is notably higher than the pairs of test images, whereupon a fake sipe was located, whereby it can occur that in some cases the Harris-corners exhibit limits, even whilst recalling that over 90% of the time a crack is still identified at least once during a complete test.

It is possible then to assume the retention of the counting method but to experiment with other algorithms with detections features with the aim of finding more robust types of invariants, or even combinations thereof. Following the completion of the detection step, and therefore in view of longer term developments, it is reasonable to imagine that with appropriate adaptations and updates to said step with the introduction of technologies with superior performance, the use of the vision system and related software could be extended to a panorama of very broad applications, insofar as it is possible to think about the usage thereof on different parts on the pneumatic tyre, or searching for additional types of failure, or monitoring different pneumatic tyre testing methods, characterized, for example, by a variable speed of rotation.

The present invention has heretofore been described with reference to the preferred embodiments thereof. It is intended that each of the technical solutions implemented in the preferred embodiments described herein by way of example can advantageously be combined in different ways between them in order to give form to other embodiments which belong to the same inventive nucleus and that all fall within the scope of protection afforded by the claims recited hereinafter.

**Claims**

**1.** Process for real-time detection of defects in the surface of a pneumatic tyre comprising the steps of:

- placing the pneumatic tyre in rotation about the axis thereof at a predetermined speed;
- performing a scan of the surface of the pneumatic tyre by means of the acquisition of linear images, in sequence at a predefined frequency, by a linear digital camera, in order to obtain a sequence of overall images of said overall surface;
- selecting a reference image from amongst said overall images;
- pre-processing each of said overall images, in order to normalize them in size and/or brightness and/or contrast;
- storing each overall image obtained, together with corresponding time information that identifies the instant of the generation thereof;
- comparing each overall image temporally successive to said reference image with said reference image, in order to detect the formation of a defect; and
- reporting the detection of the formation of a defect together with the instant of the generation of the corresponding overall image,

wherein said step of comparing each overall image comprises a step of the cropping of said overall image into portions of predefined dimensions and a step of the alignment of said overall image with respect to said reference image,

wherein said comparison step comprises, for each of said portions, a step of converting the value of each pixel into a binary value as a function of a comparison with a predefined threshold, said threshold being a function of the mean value of the pixels in the corresponding portion of the reference image, highlighting regions corresponding to potential defects,

the process further comprising a validation step in order to discard any false detections, **the process being characterized in that** said validation step in turn comprises a step of comparing between:

- a superficial extension value expressed in pixels$^2$ of each area identified as a potential defect; and
- a predetermined surface threshold value expressed in pixels$^2$,

discarding the areas identified as a potential defect, wherein said superficial extension value is lower than said surface threshold value.

2. Process according to claim 1, wherein said pre-processing step comprises a step of rotating and/or tilting said overall images.

3. Process according to claim 1 or 2, wherein said pre-processing step comprises a step of cropping said overall images, in order to exactly isolate the surface of said pneumatic tyre.

4. Process according to one of the preceding claims, wherein said pre-processing step comprises a step of resizing each overall image in order to normalize the dimensions thereof.

5. Process according to one of the preceding claims, wherein said pre-processing step comprises a step of adjusting the brightness of the pixels, with respect to the reference image.

6. Process according to one of the preceding claims, wherein said pre-processing step comprises a step of adjusting the contrast of the pixels, with respect to the reference image.

7. Process according to any one of the preceding claims, wherein said validation step comprises a step of measuring, for each region corresponding to a potential defect, the solidity and/or roundness parameters.

8. Process according to claim 7, wherein said validation step comprises a step of comparing said solidity and/or roundness parameters measured using a predetermined statistical model, discarding any detections for which the comparison reveals a discrepancy higher than a predefined validation threshold.

9. Process according to one of claims 1 to 8, further comprising a step of the alignment of the portion of the image containing the region corresponding to a potential defect with the corresponding portion of the reference image, obtaining an aligned portion.

10. Process according to one of claims 1 to 9, further comprising a step of comparing the number of characteristic and distinctive points of the portion of the image containing the region corresponding to a potential defect with the number of characteristic and distinctive points of the corresponding portion of the reference image, discarding any detections wherein the comparison between the two said numbers of points reveals a deviation lower than a predefined validation threshold.

11. Process according to claim 9 or 10, wherein said comparison step further comprises a step of converting the value of each pixel of said aligned portion into a binary value as a function of a comparison with a predefined threshold, said threshold being a function of the mean value of the pixels within the corresponding portion of the reference image, highlighting regions corresponding to defects.

12. Apparatus for the real-time detection of defects in the surface of a pneumatic tyre comprising:

- means for placing the pneumatic tyre in rotation about the axis thereof at a predetermined speed;
- means for performing a scan of the surface of the pneumatic tyre by means of the acquisition of linear images, in sequence at a predefined frequency, by a linear digital camera, in order to obtain a sequence of overall images of said surface;
- means for processing said linear images, which are configured in order to implement a process according to any one of claims from 1 to 11.

13. Electronic processing program, comprising a code that is suitable for implementing, when executed on a computer, the processing of images according to the process of one of the claims from 1 to 11.

**Patentansprüche**

1. Prozess zur Echtzeiterkennung von Defekten in der Oberfläche eines Luftreifens, umfassend die folgenden Schritte:

   - Versetzen des Luftreifens in Drehung um seine Achse mit einer vorbestimmten Geschwindigkeit;
   - Durchführen eines Abtastens der Oberfläche des Luftreifens durch Erfassen von linearen Bildern in einer Sequenz mit einer vordefinierten Frequenz durch eine lineare Digitalkamera, um eine Sequenz von Gesamtbildern der Gesamtoberfläche zu erhalten;
   - Auswählen eines Referenzbildes aus den Gesamtbildern;
   - Vorverarbeiten jedes der Gesamtbilder, um sie in Größe und/oder Helligkeit und/oder Kontrast zu normalisieren;
   - Speichern jedes erhaltenen Gesamtbildes zusammen mit der entsprechenden Zeitinformation, die den Zeitpunkt dessen Erzeugung angibt;
   - Vergleichen jedes Gesamtbildes, das zeitlich auf das Referenzbild folgt, mit dem Referenzbild, um die Entstehung eines Defekts zu erkennen; und
   - Melden der Erkennung der Entstehung eines Defekts zusammen mit dem Zeitpunkt der Erzeugung des entsprechenden Gesamtbildes,

      wobei der Schritt des Vergleichens jedes Gesamtbildes einen Schritt des Zuschneidens des Gesamtbildes in Abschnitte mit vordefinierten Abmessungen und einen Schritt des Ausrichtens des Gesamtbildes in Bezug auf das Referenzbild umfasst,
      wobei der Vergleichsschritt für jeden der Abschnitte einen Schritt des Umwandelns des Werts jedes Pixels in einen Binärwert in Abhängigkeit von einem Vergleich mit einem vordefinierten Schwellenwert umfasst, wobei der Schwellenwert abhängig vom Mittelwert der Pixel in dem entsprechenden Abschnitt des Referenzbildes ist, wodurch Bereiche hervorgehoben werden, die potenziellen Defekten entsprechen,
      wobei der Prozess ferner einen Validierungsschritt umfasst, um etwaige Fehlerkennungen zu verwerfen, **wobei der Prozess dadurch gekennzeichnet ist, dass** der Validierungsschritt seinerseits einen Schritt des Vergleichens umfasst zwischen:

      - einem Wert für die Oberflächenausdehnung, ausgedrückt in Pixel$^2$, jedes Bereichs, der als potenzieller Defekt identifiziert wurde; und
      - einem vorbestimmten Schwellenwert der Oberfläche, ausgedrückt in Pixel$^2$,
      Verwerfen der als potenzieller Defekt identifizierten Bereiche, wobei der Wert für die Oberflächenausdehnung niedriger ist als der Schwellenwert für die Oberfläche.

2. Prozess nach Anspruch 1, wobei der Vorverarbeitungsschritt einen Schritt des Drehens und/oder Kippens der Gesamtbilder umfasst.

3. Prozess nach Anspruch 1 oder 2, wobei der Vorverarbeitungsschritt einen Schritt des Zuschneidens der Gesamtbilder umfasst, um die Oberfläche des Luftreifens genau zu isolieren.

4. Prozess nach einem der vorstehenden Ansprüche, wobei der Vorverarbeitungsschritt einen Schritt zur Größenänderung jedes Gesamtbildes umfasst, um dessen Abmessungen zu normalisieren.

5. Prozess nach einem der vorstehenden Ansprüche, wobei der Vorverarbeitungsschritt einen Schritt zum Anpassen der Helligkeit der Pixel, unter Bezugnahme auf das Referenzbild, umfasst.

6. Prozess nach einem der vorstehenden Ansprüche, wobei der Vorverarbeitungsschritt einen Schritt zum Anpassen des Kontrasts der Pixel unter Bezugnahme auf das Referenzbild umfasst.

7. Prozess nach einem der vorstehenden Ansprüche, wobei der Validierungsschritt einen Schritt umfasst, bei dem für jeden Bereich, der einem potenziellen Defekt entspricht, die Festigkeits- und/oder Rundheitsparameter gemessen werden.

8. Prozess nach Anspruch 7, wobei der Validierungsschritt einen Schritt des Vergleichens der Festigkeits- und/oder Rundheitsparameter umfasst, die unter Verwendung eines vorbestimmten statistischen Modells gemessen wurden, wobei alle Erkennungen verworfen werden, für die der Vergleich eine Diskrepanz ergibt, die höher als ein vorbestimmter Validierungsschwellenwert ist.

9. Prozess nach einem der Ansprüche 1 bis 8, ferner umfassend einen Schritt der Ausrichtung des Abschnitts des Bildes, der den Bereich enthält, der einem potenziellen Defekt entspricht, mit dem entsprechenden Abschnitt des Referenzbildes, wodurch ein ausgerichteter Abschnitt erhalten wird.

10. Prozess nach einem der Ansprüche 1 bis 9, ferner umfassend einen Schritt des Vergleichens der Anzahl charakteristischer und unterscheidbarer Punkte des Bildabschnitts, der den Bereich enthält, der einem potenziellen Defekt entspricht, mit der Anzahl charakteristischer und unterscheidbarer Punkte des entsprechenden Abschnitts des Referenzbildes, wobei alle Erkennungen verworfen werden, wobei der Vergleich zwischen den beiden Anzahlen von Punkten eine Abweichung ergibt, die geringer ist als ein vordefinierter Validierungsschwellenwert.

11. Prozess nach Anspruch 9 oder 10, wobei der Vergleichsschritt ferner einen Schritt des Umwandelns des Werts jedes Pixels des ausgerichteten Abschnitts in einen Binärwert in Abhängigkeit von einem Vergleich mit einem vordefinierten Schwellenwert umfasst, wobei der Schwellenwert abhängig vom Mittelwert der Pixel innerhalb des entsprechenden Abschnitts des Referenzbildes ist, wodurch Bereiche hervorgehoben werden, die Defekten entsprechen.

12. Vorrichtung zur Echtzeiterkennung von Defekten in der Oberfläche eines Luftreifens, umfassend:

- Mittel, um den Luftreifen mit einer vorbestimmten Geschwindigkeit in Drehung um seine Achse zu versetzen;
- Mittel zum Durchführen eines Abtastens der Oberfläche des Luftreifens durch Erfassen von linearen Bildern in einer Sequenz mit einer vordefinierten Frequenz durch eine lineare Digitalkamera, um eine Sequenz von Gesamtbildern der Oberfläche zu erhalten;
- Mittel zum Verarbeiten der linearen Bilder, die konfiguriert sind, um einen Prozess nach einem der Ansprüche 1 bis 11 zu implementieren.

13. Elektronisches Verarbeitungsprogramm, umfassend einen Code, der, wenn er auf einem Computer ausgeführt wird, zum Implementieren des Verarbeitens von Bildern gemäß dem Prozess nach einem der Ansprüche 1 bis 11 geeignet ist.

**Revendications**

1. Procédé pour une détection en temps réel de défauts à la surface d'un pneumatique comprenant les étapes consistant à :

- placer le pneumatique en rotation autour de l'axe de celui-ci à une vitesse prédéterminée ;
- effectuer un balayage de la surface du pneumatique au moyen de l'acquisition d'images linéaires, en séquence à une fréquence prédéfinie, par une caméra numérique linéaire, afin d'obtenir une séquence d'images globales de ladite surface globale ;
- sélectionner une image de référence parmi lesdites images globales ;
- prétraiter chacune desdites images globales, afin de les normaliser en dimension et/ou en luminosité et/ou en contraste ;
- stocker chaque image globale obtenue, conjointement à des informations temporelles correspondantes qui identifient le moment de la génération de celles-ci ;
- comparer chaque image globale temporellement successive à ladite image de référence avec ladite image de référence, afin de détecter la formation d'un défaut ; et
- signaler la détection de la formation d'un défaut conjointement au moment de la génération de l'image globale correspondante,

dans lequel ladite étape consistant à comparer chaque image globale comprend une étape consistant à recadrer ladite image globale en parties de dimensions prédéfinies et une étape consistant à aligner ladite image globale par rapport à ladite image de référence,

dans lequel ladite étape de comparaison comprend, pour chacune desdites parties, une étape consistant à convertir la valeur de chaque pixel en une valeur binaire en fonction d'une comparaison avec un seuil prédéfini, ledit seuil étant une fonction de la valeur moyenne des pixels dans la partie correspondante de l'image de référence, en mettant en évidence des régions correspondant à des défauts potentiels,

le procédé comprenant en outre une étape de validation afin de rejeter l'une quelconque de fausses détections,

**le procédé étant caractérisé en ce que** ladite étape de validation comprend à son tour une étape consistant à comparer entre :

- une valeur d'extension superficielle exprimée en pixels$^2$ de chaque zone identifiée en guise de défaut potentiel ; et
- une valeur de seuil de surface prédéterminée exprimée en pixels$^2$,

en rejetant les zones identifiées en guise de défaut potentiel, dans lequel ladite valeur d'extension superficielle est inférieure à ladite valeur de seuil de surface.

2. Procédé selon la revendication 1, dans lequel ladite étape de prétraitement comprend une étape consistant à faire tourner et/ou à basculer lesdites images globales.

3. Procédé selon la revendication 1 ou 2, dans lequel ladite étape de prétraitement comprend une étape consistant à recadrer lesdites images globales, afin d'isoler exactement la surface dudit pneumatique.

4. Procédé selon l'une des revendications précédentes, dans lequel ladite étape de prétraitement comprend une étape consistant à redimensionner chaque image globale afin de normaliser les dimensions de celle-ci.

5. Procédé selon l'une des revendications précédentes, dans lequel ladite étape de prétraitement comprend une étape consistant à ajuster la luminosité des pixels, par rapport à l'image de référence.

6. Procédé selon l'une des revendications précédentes, dans lequel ladite étape de prétraitement comprend une étape consistant à ajuster le contraste des pixels, par rapport à l'image de référence.

7. Procédé selon l'une quelconque des revendications précédentes, dans lequel ladite étape de validation comprend une étape consistant à mesurer, pour chaque région correspondant à un défaut potentiel, les paramètres de solidité et/ou de rondeur.

8. Procédé selon la revendication 7, dans lequel ladite étape de validation comprend une étape consistant à comparer lesdits paramètres de solidité et/ou de rondeur mesurés en utilisant un modèle statistique prédéterminé, en rejetant l'une quelconque de détections pour lesquelles la comparaison révèle un écart supérieur à un seuil de validation prédéfini.

9. Procédé selon l'une des revendications 1 à 8, comprenant en outre une étape consistant à aligner la partie de l'image contenant la région correspondant à un défaut potentiel avec la partie correspondante de l'image de référence, en obtenant une partie alignée.

10. Procédé selon l'une des revendications 1 à 9, comprenant en outre une étape consistant à comparer le nombre de points caractéristiques et distinctifs de la partie de l'image contenant la région correspondant à un défaut potentiel avec le nombre de points caractéristiques et distinctifs de la partie correspondante de l'image de référence, en rejetant toute détection dans laquelle la comparaison entre lesdits deux nombres de points révèle une déviation inférieure à un seuil de validation prédéfini.

11. Procédé selon la revendication 9 ou 10, dans lequel ladite étape de comparaison comprend en outre une étape consistant à convertir la valeur de chaque pixel de ladite partie alignée en une valeur binaire en fonction d'une comparaison avec un seuil prédéfini, ledit seuil étant une fonction de la valeur moyenne des pixels au sein de la partie correspondante de l'image de référence, en mettant en évidence des régions correspondant à des défauts.

12. Appareil pour la détection en temps réel de défauts à la surface d'un pneumatique comprenant :

- des moyens pour placer le pneumatique en rotation autour de l'axe de celui-ci à une vitesse prédéterminée ;
- des moyens pour effectuer un balayage de la surface du pneumatique au moyen de l'acquisition d'images linéaires, en séquence à une fréquence prédéfinie, par une caméra numérique linéaire, afin d'obtenir une séquence d'images globales de ladite surface ;
- des moyens pour traiter lesdites images linéaires, qui sont configurés afin de mettre en oeuvre un procédé selon l'une quelconque des revendications allant de 1 à 11.

13. Programme de traitement électronique, comprenant un code qui est adapté pour mettre en oeuvre, lorsqu'il est exécuté sur un ordinateur, le traitement d'images selon le procédé de l'une des revendications allant de 1 à 11.

FIG. 1

**FIG. 2**

**FIG. 3**

**FIG. 4**

**FIG. 5**

FIG. 5A

Interpolated

Interpolated

Interpolated

FIG. 6

**FIG. 7**

FIG. 8

FIG. 9

FIG. 10

**FIG. 11**

**FIG. 12**

FIG. 13

FIG. 14

FIG. 15

FIG. 16

Get Reference Image Ir → Get Actual Image Ia → Calculate Displacement Vector Field → Set Vector Field = 0 on Ia → Get Undeformed Ia → Calculate Ir ÷ Ia → Get Divided Undeformed Ia → Get areas proposed as potential failure (loop n times) → Intersect areas proposed as potential failure → Get areas containing real failure

**FIG. 17**

**FIG. 18**

FIG. 19

FIG. 20

**FIG. 21**

**FIG. 22**

**FIG. 23**

FIG. 24

FIG. 25

FIG. 26

FIG. 27

FIG. 28

FIG. 29

FIG. 30

**FIG. 31**

**FIG. 32**

**Roundness Overall**

FIG. 33

FIG. 34

FIG. 35

**FIG. 35**

| Ref | Cur | Ref shifted | Cur-Ref before | Cur-Ref after |

**FIG. 36**

| Ref | Cur | Ref shifted | Cur-Ref before | Cur-Ref after |

**FIG. 37**

**FIG. 38**

**FIG. 39**

**FIG. 40**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160221404 A1
- US 5874670 A
- WO 2017060739 A1
- DE 102012024545 A1